(19) Europäisches Patentamt
European Patent Office
Office européen des brevets

(11) Veröffentlichungsnummer: **0 439 131 A1**

(12) **EUROPÄISCHE PATENTANMELDUNG**

(21) Anmeldenummer: **91100810.0**

(51) Int. Cl.[5]: **C02F 1/58**, C08F 6/00

(22) Anmeldetag: **23.01.91**

(30) Priorität: **23.01.90 DE 4001850**

(43) Veröffentlichungstag der Anmeldung: **31.07.91 Patentblatt 91/31**

(84) Benannte Vertragsstaaten: **AT BE CH DE DK ES FR GB GR IT LI LU NL SE**

(71) Anmelder: **BERGHOF ELEKTRONIK PRODUKTIONS- UND VERTRIEBSGES. m b.H.**
**Wiesing 323**
**A-6200 Jenbach(AT)**

(72) Erfinder: **Schüssler, Roland**
**Ranzenäckerstrasse 2/2**
**W-7311 Schlierbach(DE)**

(74) Vertreter: **Boeters, Hans Dietrich, Dr. et al**
**Boeters & Bauer Patentanwälte**
**Bereiteranger 15**
**W-8000 München 90(DE)**

(54) **Verfahren und Vorrichtung zum Reinigen von mit Monomeren oder Oligomeren belasteten Spülwassern.**

(57) Monomere und Oligomere enthaltendes Spülwasser wird im Reaktionsbehälter mit polymerisationsnitrirenden Reagentien (z.B. H202) gemischt und erwärmt.

Nach der Beendigung der Polymerisationreaktion wird der Behälterinhalt über ein Filter (16), wo das entstandene Mischpolymerisat abgetrennt wird, in den Reinwasserbehälter (14) abgepumpt.

EP 0 439 131 A1

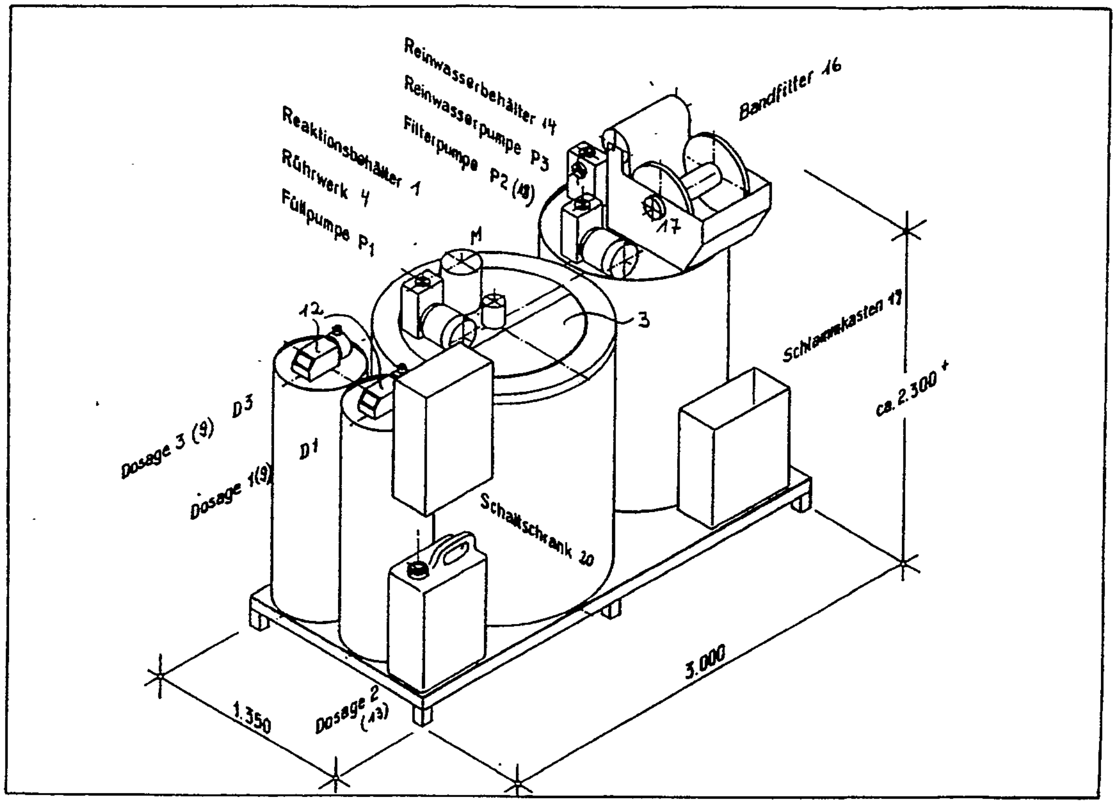
Reinwasserbehälter 14
Reinwasserpumpe P3
Filterpumpe P2 (18)
Bandfilter 16
Reaktionsbehälter 1
Rührwerk 4
Füllpumpe P1
M
12
3
17
Schlammkasten 17
ca. 2.300
Dosage 3 (9) D3
D1
Dosage 1(9)
Schaltschrank 20
3.000
1.350
Dosage 2 (13)

Fig. 10

## VERFAHREN UND VORRICHTUNG ZUM REINIGEN VON MIT MONOMEREN ODER OLIGOMEREN BELASTETEN SPÜLWASSERN.

Insbesondere Guß-, aber auch andere Werkstücke, an die hohe Anforderungen in Bezug auf Dichtheit bestehen (Vergaser, Motorblöcke, Retardergehäuse) müssen zur Sicherstellung ihres Gebrauchswertes einer Imprägnierung der unvermeidbaren Lunker und Haarrisse unterzogen werden.

Die Behandlung sieht folgende Schritte vor:

- gewissenhaftes Entfetten der Werkstücke im Per-Dampf
- Abtauchen der Werkstücke in die Imprägnier-Monomer-Lösung in einem Autoklaven
- Evakuierung des Autoklaven zur Entgasung von Haarrissen und Lunkern in den Werkstücken
- Druckaufgabe auf den Autoklaven zur Verpressung der oben genannten Lösung in die Haarrisse
- Ausheben, Abtropfen und Waschen der Werkstücke in einer Spülzone, Waschzone
- Ausheben der Werkstücke mit anschließender Verbringung in ein Polymerisationsbecken: Aushärten / Polymerisieren in der Siedehitze (ca. 90-grädiges Wasser)

Die bekannten Anlagen bedienen sich in der Waschzone im wesentlichen einer einstufigen Fließspüle. Als Imprägnierlösung dient häufig eine Methacrylatester-Lösung, z. B. Ultraseal PC 504 oder PC 504/M (Fa. Ultraseal GmbH, Schwieberdingen) oder IM 3000 mit KT64 (Fa. Maldaner, Langenfeld).

Neben der unwirtschaftlichen weil sehr frischwasserintensiven Fahrweise dieser Spültechnik ergeben sich Probleme mit erheblicher Umweltrelevanz:

- verantwortungsloser Umgang mit Trinkwasser
- Ausschleppung erheblicher CSB-Frachten * ) in die Kanalisation
- Ausschleppung von organischen Lösungen, an deren toxikologischer und ökologischer Unbedenklichkeit zumindest Zweifel bestehen
- Gefahr des durch Polymerisation bedingten "Zuwachsens" der Kanalisation.

Es ist deshalb Aufgabe der Erfindung, ein Verfahren und eine Vorrichtung zur Verfügung zu stellen, mit deren Hilfe die Belastung von Spülwässern aus Metall-Imprägnieranlagen mit Monomeren oder Oligomeren stark gesenkt wird, sodaß diese Spülwasser entweder wiederverwendet werden können, oder sodaß sie, wenn sie der Kanalisation zugeführt werden sollen, einen möglichst geringen CSB-Wert aufweisen.

Dementsprechend wird ein Verfahren zum Reinigen von mit Monomeren oder Oligomeren belasteten Spülwässern aus Metall-Imprägnieranlagen zur Verfügung gestellt, dadurch gekennzeichnet, daß

- ein Spülwasser mit einer Monomer- bzw. Oligomerkonzentration von mindestens 0.2 Vol.-% einer Reinigungsanlage zugeführt und
- unter Rühren auf etwa 85°-100° C, bevorzugt 90-95° C aufgeheizt wird,
- nach Erreichen der gewünschten Temperatur unter weiterem Rühren die polymerisationinitiierenden Reagentien in ausreichender Menge zudosiert werden,
- nach Erreichen des Klarpunkts entweder
  (a) die Reaktion beendet wird *oder*
  (b) durch weiteres Zudosieren der Reagentien weiterer chemischer Sauerstoffbedarf (CSB) abgebaut wird,
- bei Bedarf der pH der Lösung korrigiert wird,
- bei Bedarf die Temperatur auf ≦ 35° C abgesenkt wird,
  (a') der Behälterinhalt unter Beibehaltung des Rührvorgangs über ein Filter abgepumpt wird *oder*
  b') man das Mischpolymerisat zu einem stichfesten Kuchen sedimentieren läßt und
- das Sediment bzw. der Filterbelag gegebenenfalls auf eine Deponie bzw. in eine Müllverbrennungsanlage verbracht wird.

Bevorzugte Ausgestaltungen dieses Verfahrens ergeben sich aus den Unteransprüchen 2 bis 8.

Das erfindungsgemäße Verfahren führt zu einer CSB-Senkung von bis zu einer Zehnerpotenz des Spülwassers. Wenn als polymerisationsinitiierende Reagenzien nur organische bzw. thermisch zersetzbare Chemikalien eingesetzt werden, ist das Spülwasser wegen der fehlenden bzw. nur unwesentlichen Aufsalzung (Leitfähigkeit des behandelten Wassers) gut recyclingfähig. Der Einsatz der bevorzugten Reagentien Wasserstoffperoxid und Thioharnstoff ist dazu außerordentlich kostensparend. Weitere Vorteile des Verfahrens sind: Die Semiautomatisierbarkeit des Verfahrens, die Vermeidung einer zusätzlichen (künstlichen) Schlammproduktion, und eine Kostensenkung bei der Abfallbeseitigung, da das gebildete Polymerisat meist

* CSB: Chemischer Sauerstoff-Bedarf; Maß für oxidierbare/organische Schmutzbelastung des Abwassers / der Kläranlage

einen inerten Kunststoff darstellt (keinen Sonderabfall) und vorzugsweise der Müllverbrennung zugänglich ist. Außerdem ist das Polymerisat problemlos filtrier- oder sedimentierbar.

Das erfindungsgemäße Verfahren kann beispielsweise bei einer Methacrylatester-Konzentration des Spülwassers von 1 Vol.-% folgendermaßen ablaufen (siehe dazu das Diagramm der Fig. 1):

- Das Imprägnier-Abwasser wird in einem (indirekt) beheizten Rührbehälter auf etwa 85-100° C, bevorzugt 90-95° C, aufgeheizt.
- 15 Minuten nach Erreichen der Temperatur erfolgt Dosierbeginn der beiden vorzugsweise stark verdünnten Reagentien. Die Dosiergeschwindigkeit wird so gedrosselt, daß die voraussichtliche Reaktionsdauer von 1.5 Stunden auf keinen Fall unterschritten wird
  Arbeitstakt: wenige, vorzugsweise 3 Sekunden
  Pause: ca. 1 Minute
- Die Prozeßüberwachung erfolgt halbautomatisch durch visuelle Kontrolle nach dosiermengenabhängiger Signalgabe oder durch Trübemelder (14-tägiger Reinigungszyklus bzw. Duplexschaltung) ist möglich, wogegen sich eine redoxgeführte Nachdosierung eines der beiden Reagenzien trotz gutem Redoxsignal wegen einer Belagbildung auf der Elektrode nicht bewährt hat.
- Bei Erreichen des "Klarpunktes" gilt die Reaktion als abgeschlossen, d.h. wenn innerhalb von 10 Minuten keine Nachtrübung einsetzt.
- Der Behälterinhalt kann unter Beibehaltung der Rührung über ein Filter, z.B. ein Papierbandfilter, abgepumpt werden. Alternative:
  Binnen weniger Stunden sedimentiert das Mischpolymerisat zu einem stichfesten und damit deponiefähigen Kuchen, was eine Filtration überflüssig macht.
- Sowohl bei Ableitung als auch bei Wiederverwendung des Wassers ist die Temperatur durch geeignete Maßnahmen auf unter 35° C einzustellen. Dies ist möglich durch Einbindung in einen Kühl(turm)kreislauf, mit Hilfe einer in das System integrierten Wärmepumpe oder durch die Ableitung des Reinwassers über einen Strahlventilator (Verdunstungskühlung).
- Bei Ablauf in den Kanal darf über den "Klarpunkt übertitriert" werden, d.h. weiterer CSB auf Kosten des Leitwertes abgebaut werden, wogegen der CSB beim Wasserrecycling unerheblich ist, aber ein zu hoher Leitwert ($\geqq$ 2.500 $\mu$S/cm) Korrosion verursacht.
- Bei dem ausgefallenen und abgetrennten Polymerisat handelt es sich um völlig neutrales und inertes Kunststoffgranulat, das auf Hausmülldeponien abgelagert werden kann bzw. zur Müllverbrennung gelangt (Abfallnummer 58 103).
- CSB-Erniedrigung:
  a) Klarpunkt von 22.000 auf 3.100 mg/1 erniedrigt
  b) 200% d.Th. von 22.000 auf 2.010 mg/1 erniedrigt

Zur Auspolymerisierung der Mono- oder Oligomeren sind zwei grundsätzliche Verfahrensweisen denkbar: thermische Polymerisation und/oder die Initiierung der Reaktion/Bereitstellung der erforderlichen Aktivierungsenergie durch ein Redox-System.

- Thermische Polymerisation reicht nur aus bei wasserfreien oder hochkonzentrierten Lösungen, wie sie beim Imprägnierverfahren eingesetzt werden.
- Mit zunehmender Verdünnung der Mono- oder Oligomer-Emulsion im (Spül-)Wasser wird deshalb zusätzlich zur thermischen Energie (Siedehitze) ein starkes Redox-System erforderlich zur Auslösung der Polymerisierung und Ausfällung des Polymerisates aus der Emulsion/dem Spülwasser.

Ein bevorzugtes Redox-System besteht aus

a) **Perhydrol, handelsübliches Wasserstoffperoxid, $H_2O_2$**
als Oxidationsmittel, vorzugsweise verdünnt dosiert

b) **Thioharnstoff /Sulfoharnstoff; $(NH_2)_2CS$**
als Reduktionsmittel, vorzugsweise als verdünnte Lösung dosiert.

Die Vorzüge des Thioharnstoffs als Reduktionsmittel sind folgende:

a) drei tautomeriebedingte reaktionsfähige Gruppen im Molekül
b) ausgesprochenes Polykondensations-Chemikal
c) ausgesprochener Vulkanisations- / Vernetzungsbeschleuniger
d) Einsatz als Stabilisator für Polymerisate
e) Unter stöchiometrischen Bedingungen wird der Thioharnstoff in Polymerisat inkorporiert. Bei überstöchiometrischem Einsatz von Thioharnstoff wird kolloidal ausfallender, elementarer Schwefel in großer Toleranzbreite in/an der Polymerstruktur ab-/adsorbiert, was eine zuverlässige Klärung des Wassers garantiert.
f) Preiswürdigkeit und einfache Handhabung in Löse-Dosierstationen.

Das erfindungsgemäße Verfahren läßt sich mit Spülwässern durchführen, die mit mindestens etwa 0.2 Vol.-%, bevorzugt mindestens etwa 1.0 Gew.-% Mono- oder Oligomeren belastet sind. Unterhalb einer Konzentration von etwa 0.2 Vol.-% kann die Auslösung der Polymerisationsreaktion problematisch werden. Eine Obergrenze der Konzentration kann sich durch die Einschränkung der Rührfähigkeit ergeben; sie liegt für Methacrylatester bei etwa 10 Vol.-%.

Mit zunehmender Harzkonzentration nimmt

- der spezifische Chemikalienbedarf ab
- die Polymerisationsdauer ab
- das Polymerisatvolumen zu
- der mittlere Polymerisatdurchmesser zu.

Es ist dementsprechend bevorzugt, Spülwässer mit möglichst hohen Monomer- und Oligomerkonzentrationen einzusetzen.

Möglich ist weiterhin die Rückführung des behandelten reinen Wassers für andere betriebsinterne Produktionsprozesse (z.B. häufig in Gießereien anzutreffende Gleitschleiferei).

Fig. 2 zeigt eine gängige Metall-Imprägnieranlage. Die durchschnittliche Harzausschleppung aus dem Imprägnierbehälter dieser Anlage beträgt ca. 20 kg je Schicht. Um befriedigende Waschergebnisse zu erzielen, sind bei einstufiger Spülung mehrere Kubikmeter Waschwasser erforderlich. Die Harzkonzentration liegt damit größenordnungsmäßig bei ca. 0.2 %.

Erfindungsgemäß wird deshalb vorgeschlagen, in solchen Fällen, in denen die Harzkonzentration wesentlich unter 1 Gew.-% liegt, die Spülstufe des Metall-Imprägnierverfahrens in Kaskadenspültechnik durchzuführen.

Bevorzugt erfolgt diese Spülung unter Einsatz zweier Spülbecken (vgl. Fig. 3 und Berechnungen der Fig. 4). Dadurch läßt sich die Harzkonzentration um etwa eine Größenordnung steigern, gleichzeitig ergibt sich eine drastische Senkung des Wasserverbrauchs und die Möglichkeit der Verlängerung der Standzeit des Polymerisationsbades. Mit drei Spülbecken lassen sich Monomer- und Oligomerkonzentrationen bis ca. 5 Gew.-% erreichen.

Die Spülung kann beispielsweise wie folgt durchgeführt werden:

- Inhalt von Spülbad 1 (beispielsweise mit einer Konzentration von 1,5 Vol.-% Mono- und Oligomeren) wird täglich einmal zur Behandlungsanlage abgepumpt und durch Inhalt von Spülbad 2 ersetzt. Spülbad 2 wird durch Frischwasser aufgefüllt.
- Bei Recyclingbetrieb kann Reinwasser aus der Behandlungsanlage wahlweise verwendet werden
  a) in heißem Zustand für Neubefüllung des Polymerisierbades
  b) durch geeignete Maßnahmen abgekühlt und verschnitten mit Frischwasser (Ergänzung von Verlusten) zur Befüllung von Spülbad 2
  c) für die Versorgung anderer wasserverbrauchender Prozesse im Betrieb.

Sofern sich während des Reinigungsverfahrens der pH-Wert ändert, was z.B. infolge von Sulfit-Bildung geschehen kann, kann er gegebenenfalls durch Zugabe eines Puffers (z.B. $NaHCO_3$ ) stabilisiert werden.

Die mit dem Reinigungsverfahren behandelten Abwässer können entweder wieder verwertet oder abgeleitet werden.

Schematische Darstellungen, die den Verbund von Imprägnierverfahren und Reinigungsverfahren zeigen, sind in den Fig. 4 bis 6 gegeben. Dabei zeigt Fig. 5 die Rückführung des gereinigten Wassers in das Aushärtebad der Imprägnieranlage, Fig. 6 eine Ausführungsform mit Wärmepumpe und Fig. 6a eine solche mit Ableitung des gereinigten Wassers.

Recycling und Ableitung des Abwassers sind zwei grundsätzlich verschiedene Aufgabenstellungen. Im Vordergrund stehen dabei

| | |
|---|---|
| bei Recycling: | <u>keine</u> <u>Erhöhung</u> <u>der</u> <u>Leitfähigkeit</u> (CSB unerheblich, thermische Aufbereitung im Vordergrund) |
| bei Ableitung: | <u>CSB-Senkung</u> (Leitfähigkeit unerheblich, chemische Aufbereitung im Vordergrund). Außerdem muß bei der Einleitung ins Abwasser die gesetzlich vorgeschriebene Temperatur eingehalten werden. |

Im ersteren Falle wird erfindungsgemaß mit dem Erreichen des Klarpunkts die Reaktion abgebrochen, um einen zu hohen Leitwert zu vermeiden, der Korrosion an der Ware verursachen würde.

Im zweiten Falle darf erfindungsgemäß über den Klarpunkt übertitriert werden, um weiteren CSB abzubauen. Ein Anstieg des Leitwertes kann hier in Kauf genommen werden.

Das erfindungsgemäße Verfahren kann mit Hilfe einer Vorrichtung durchgeführt werden, die folgende Einheiten aufweist:

- einen Reaktionsbehälter mit Heizung, Rührwerk und Dosiervorrichtung
- einen Reinwasserbehälter, gegebenenfalls mit Filtereinrichtung(en)
- gegebenenfalls einen Steuerteil.

Im folgenden sollen nun verschiedene Ausführungsformen der erfindungsgemäße Vorrichtung erläutert werden. Die Fig. 7 bis 9 geben schematische Darstellungen verschiedener Ausführungsformen wieder, Fig. 10 und 11 Ausführungsformen mit konkreten Abmessungen. Die Bezugnahme auf in diesen Fig. dargestellte Vorrichtungsteile in der folgenden Vorrichtungsbeschreibung hat rein beispielhaften Charakter und darf nicht eischränkend verstanden werden.

Der Reaktionsbehälter (7/01-11/01), der beispielsweise ein Netto-Nutzvolumen von 1000 l aufweist, kann mit einer Schutzverkleidung und/oder Isolierung versehen sein. Die Beheizung erfolgt vorzugsweise durch eine Mantelbeheizung (7/02-9/02), denn beim Erhitzen des Prozeßmediums auf die benötigten Temperaturen würden im Behälter verlaufende Rohre mit Polymerisat verklebt werden. Diese Heizung kann beispielsweise als 3-Kreis-Elektroheizung (z.B. mit 3 x 6 kW) oder als Halbrohrspirale für ein Wärmeträgermedium ausgebildet sein. Der Behälter kann eine Abdeckung in Form eines Klappsegment-Deckels (10/03, 11/03) besitzen, der für Kontrolle oder Revisionsarbeiten zu öffnen ist. Das Rührwerk (7/04-11/04) des Behälters ist vorzugsweise ein schnellaufender Propellermischer, z.B. aus Edelstahl, da die Polymerisation im ersten Stadium zu gallertartig-klebrigen Polymerisaten führt.

Der Reaktionsbehälter (7/01-11/01) weist üblicherweise ein Füllorgan, z.B. eine selbstsaugende Schmutzwasserpumpe (P1) auf. Wegen des gallertartigen Niederschlags im Frühstadium der Polymerisation kann zum Abwischen der Behälterwandung während des Reinigungsverfahrens eine Wischerkinematik (7/05-9/05) mit vorzugsweise elektropneumatischem Wende-Drehantrieb vorgesehen sein. Mehrfache Niveaumessungen (z.B. pneumatische Einperl-Niveaumessungen), Temperaturanzeigen und Thermoschalter (7/06-9/06) sowie vorzugsweise drei Dosierstellen (7/07-9/07) für die Reaktionschemikalien und Befüll- und Entleerungsanschlüsse sind weitere bevorzugte Zusatzaggregate. Diese können auf einer Gerätetraverse untergebracht sein, die z.B. am Reaktionsbehälter (7/01-11/01) angebracht ist.

Eine bevorzugte Ausführungsform der erfindungsgemäßen Vorrichtung besitzt weiterhin Löse- und Dosierstationen für die zuzudosierenden Chemikalien. Für feste Chemikalien können diese beispielsweise als Thermoplast-Rundbehälter (10/09, 11/09), z.B. mit einem Netto-Nutzvolumen von 250 l, ausgeführt sein und eine oder mehrere der folgenden Vorrichtungen umfassen: Eine automatische Wassernachspeisung mit z.B. Absperrorgan und Schlauchanschluß, Schmutzfänger und niveaugesteuertem Magnetventil, einen gelochten Zwischenboden (7/10-9/10) zur Aufgabe der festen Chemikalie, ein Tauchrohr (7/11-9/11) zum Soleraum zur Aufnahme einer Sauggarnitur der Dosierpumpe und einer (pneumatischen Einperl-)Niveaumessung (2-fach) sowie eine Dosierpumpe (10/12, 11/12), z.B. eine Magnet-Membran-Dosierpumpe, die bevorzugt auf einen abnehmbaren Deckel aufgesetzt ist. Dosierstationen für flüssige Chemikalien können statt dessen auch z.B. handelsübliche Liefergebinde (10/13, 11/13) umfassen, die mit einer wie oben beschriebenen Dosierpumpe und einem Dosierkopf mit Dosierventil und Schlauch ausgerüstet sind.

Der Reinwasserbehälter (7/14-11/14) dient zur Aufnahme und Zwischenstapelung des abfiltrierten Wasssers nach der Behandlung und kann beispielsweise als Stahl- oder Thermoplastbehälter mit einem Nutzvolumen von 1000 l ausgeführt sein. Sofern das Verfahren das Abpumpen des Behälterinhaltes über einen Filter vorsieht, ist die Filtereinrichtung (7/15-11/15) an, vorzugsweise auf dem Reinwasserbehälter montiert.

Die Filtereinrichtung (7/15-11/15) weist einen Filter auf, der ein automatischer Kompaktbandfilter (10/16, 11/16) sein kann. Der Filter kann ein Gehäuse aus Stahlblech und ein Endlosgliederband (als Stützauflage für das Filtervlies) besitzen. Es kann beispielsweise eine Aufnahme für die Filtervliesrolle (10/17, 11/17) und ein Schlammkasten (7/19-11/19) vorgesehen sein.

Neben dem Filter umfaßt die Filtereinrichtung (7/15-11/15) vorzugsweise eine (selbstsaugende) Filterpumpe (P2) (10/18, 11/18), die die behandelte Charge aus dem Reaktionsbehälter (7/01-11/01) über den Filter in den Reinwasserwasserbehälter (7/14-11/14) befördert.Ferner kann der Reinwasserbehälter eine (selbstsaugende) Entleerungspumpe (P3) sowie wahlweise eine oder zwei Niveaumessung(en) (7/23-9/23), z.B. pneumatische Einperl-Niveaumessungen, eine pH-Taucharmatur (7/24-9/24), die zum Beispiel aus Polypropylen bestehen und eine Naßhalteschale und eine pH-Einstabmeßkette besitzen kann, und Füll- und Entleerungsanschlüsse besitzen.

Der Reinwasserbehälter (7/14-11/14) ist vorzugsweise abgedeckt und mit einer Gerätetraverse zur Aufnahme der genannten Zusatzaggregate versehen.

Der Steuerteil (7/20-11/20) der Abwasser-Behandlungsanlage besteht bevorzugt aus einem Schaltschrank aus Stahlblech zur Aufnahme von Steuereinheit und Leistungsschaltern mit allen erforderlichen Steuer-, Signal-, Überwachungs- und Bedienorganen und besitzt vorzugsweise einen potentialfreien Kontakt für Sammelstörmeldungen.

Das gereinigte Abwasser kann entweder heiß für betriebliche Zweitverwertung, zum Beispiel für untergeordnete Reinigungszwecke, wiederverwendet werden. So erzielen Gießereien in ihren Gleitschleifereien (Scheuereien) mit warmem Wasser bessere Ergebnisse als mit kaltem. Eine zweite Möglichkeit ist die Rückführung des heißen Reinwassers in das Aushärtebad der Imprägnieranlage, das eine Temperatur von ca. 90° C besitzen sollte.. Soll gekühltes Reinwasser wiederverwertet werden, so ist der Einsatz einer Wärmepumpe (8/21) vorteilhaft, wobei die Beheizung des Reaktionsbehälters vorzugsweise durch Wärmeträgeröl erfolgt.

Wenn das gereinigte Spülwasser dagegen der Kanalisation zugeführt werden soll, muß die gesetzlich hierfür vorgeschriebene Temperatur eingehalten werden. Erfindungsgemäß ist deshalb in einem solchen Fall für die Abwasser-Behandlungsanlage ein Strahlkühler (9/22) vorgesehen. Alternativ kann die Vorrichtung mit einem Kühlturmkreislauf verbunden sein.

Beispiel

In diesem Beispiel wird die Abwasserkonzentration berechnet, die ein Gießereibetrieb und eine Lohnimprägniererei mit herkömmlicher Spülweise und bei Kaskadenspülweise erzielt.

**Beispiel Gießereibetrieb**

- 3-Schicht-Betrieb
- Imprägnierung im Halbstundentakt (ca. 40 Chargen / Tag)
- (Harzverluste im Mittel 20 kg/d)
- (Ausschleppung ca. 0.5 kg /Charge)
- Spülwasserverbrauch 200 l/h, also ca. 5 $m^3$/d
- Spülbadvolumen ca. 1 $m^3$

**Herkömmliche Spülweise**

| | |
|---|---|
| - Wasserverbrauch | ca. 5 $m^3$/d |
| - Ablaufkonzentration | ca. 4.000 ppm |
| - Spülkriterium | $c_0/c_1$ = 250 |
| - Kanalbelastung | CBS = 40 kg $O_2$/d |

**Kaskadenspülweise**
errechnet gemäß Näherungsformel nach Abb. 12 für 40 Chargen / Spüldurchgänge

| | |
|---|---|
| - Wasserverbrauch | 1 $m^3$/d |
| - Konzentration Spüle 1 | 1.96% |
| - Konzentration Spüle 2 | 192 ppm |
| - Spülkriterium $c_0/c_2$ | 5.200 |
| - Kanalbelastung [1)] | CSB = 2 kg $O_2$/d |

**Vergleich**

| | |
|---|---|
| - Wasserverbrauch | 20% |
| - Kanalbelastung | 5% |
| - Spülkriterium | 20 x besser |

**Beispiel Lohnimprägniererei**

- 8 h-Schicht
- Imprägnierung im 15'-Takt, 30 Chargen / d
- Ausschleppung 1 kg / Charge
- Spülung: 1/2"-Schlauch, sehr lang, Armatur wenig gedrosselt; geschätzt 1 $m^3/h$

**Herkommliche Spülweise**

| | |
|---|---|
| - Wasserverbrauch | 10 $m^3/d$ |
| - Ablaufkonzentration | 3.000 ppm |
| - Spülkriterium $c_0/c_1$ | 333 |
| - Kanalbelastung | CSB = 60 kg $O_2/d$ |

**Kaskadenspültechnik**
errechnet gemäß Näherungsformel Abb. 12 für 30 Chargen / Spüldurchgänge

| | |
|---|---|
| - Wasserverbrauch | 1 $m^3/d$ |
| - Konzentration Spüle 1 | 2.9 % |
| - Konzentration Spüle 2 | 424 ppm |
| - Spülkriterium | 2.350 |
| - Kanalbelastung | CBS = 3 kg $O_2/d$ |

**Vergleich**

| | |
|---|---|
| - Wasserverbrauch | 10% |
| - Kanalbelastung | 5% |
| - Spülkriterium | 7 x besser |

**Patentansprüche**

1. Verfahren zum Reinigen von mit Monomeren oder Oligomeren belasteten Spülwässern aus Metall-Imprägnieranlagen, ***dadurch gekennzeichnet***, daß
   - ein Spülwasser mit einer Monomer- bzw. Oligomerkonzentration von mindestens 0.2 Vol.-% einer Reinigungsanlage zugeführt und
   - unter Rühren auf etwa 85°-100° C, bevorzugt 90-95° C aufgeheizt wird,
   - nach Erreichen der gewünschten Temperatur unter weiterem Rühren die polymerisationinitiierenden Reagentien in ausreichender Menge zudosiert werden,
   - nach Erreichen des Klarpunkts entweder
     (a) die Reaktion beendet wird *oder*
     (b) durch weiteres Zudosieren der Reagentien weiterer chemischer Sauerstoffbedarf (CBS) abgebaut wird,
   - bei Bedarf der pH der Lösung korrigiert wird,
   - bei Bedarf die Temperatur auf ≤ 35° C abgesenkt wird,
     (a') der Behälterinhalt unter Beibehaltung des Rührvorgangs über ein Filter abgepumpt wird *oder*
     b') man das Mischpolymerisat zu einem stichfesten Kuchen sedimentieren läßt und
   - das Sediment bzw. der Filterbelag gegebenenfalls auf eine Deponie bzw. in eine Müllverbrennungsanlage verbracht wird.

2. . Verfahren nach Anspruch 1, dadurch gekennzeichnet, daß das Spülwasser mit einer Monomer- bzw. Oligomerkonzentration von mindestens 1.0 Vol.-%, bevorzugt mindestens 1.5 Vol.-% belastet ist.

**3.** . Verfahren nach Anspruch 1 oder 2, ***dadurch gekennzeichnet***, daß das Spülwasser mit Acrylmonomeren wie Methacrylatester(n) als Mono- oder Oligomeren belastet ist.

**4.** . Verfahren nach einem der Ansprüche 1 bis 3, ***dadurch gekennzeichnet***, daß die die Polymerisation initiierenden Reagentien Redox-Reagentien, vorzugsweise Wasserstoffperoxid und Thioharnstoff, sind.

**5.** . Verfahren nach einem der Ansprüche 1 bis 4, ***dadurch gekennzeichnet***, daß die Dosiergeschwindigkeit der Reagentien derart ist, daß die Dauer der Polymerisationsreaktion bis zum Klarpunkt mindestens 1,5 Stunden beträgt, wobei vorzugsweise ein Arbeitstakt von etwa 3 Sekunden mit einer Pause von etwa 1 Minute eingesetzt wird.

**6.** . Verfahren nach einem der Ansprüche 1 bis 5, ***dadurch gekennzeichnet***, daß die Temperatureinstellung auf $\leq 35^{\circ}$ C durch Einbindung in einen Kühlt(turm)kreislauf oder mit Hilfe einer in das System integrierten Wärmepumpe erfolgt.

**7.** . Verfahren nach einem der Ansprüche 1 bis 5, ***dadurch gekennzeichnet***, daß die Temperatureinstellung auf $\leq 35^{\circ}$ C durch Ableitung des Reinwassers über einen Strahlventilator erfolgt.

**8.** . Verfahren nach einem der voranstehenden Ansprüche, ***dadurch gekennzeichnet***, daß durch visuelle Kontrolle oder durch Trübemelder eine Prozeßüberwachung stattfindet.

**9.** . Verfahren nach einem der voranstehenden Ansprüche, ***dadurch gekennzeichnet***, daß das Polymerisat über ein Filter, vorzugsweise ein Papierbandfilter abgepumpt wird.

**10.** 0. Verfahren zum Imprägnieren von Werkstücken mit einer Monomeren-Lösung, ***dadurch gekennzeichnet***, daß die für das Verfahren des Anspruchs 2 benötigte Abwasserkonzentration von mindestens 1,0 Gew.-%, bevorzugt mindestens 1,5 Gew.-% dadurch erreicht wird, daß die Spülung der zu imprägnierenden Werkstücke in Kaskadenspültechnik erfolgt, vorzugsweise mit zwei Spülbecken.

**11.** 1. Abwasser-Behandlungsanlage zum Reinigen von mit Monomeren oder Oligomeren belasteten Spülwässern aus Metall-Imprägnieranlagen, umfassend:

- einen Reaktionsbehälter mit Heizung, Rührwerk und Dosiervorrichtungen,
- einen Reinwasserbehälter, gegebenenfalls mit Filtereinrichtung(en),
- gegebenenfalls einen Strahlkühler, einen Kühlturmkreislauf oder eine Wärmepumpe,
- gegebenenfalls einen Steuerteil

**12.** 2. Abwasser-Behandlungsanlage nach Anspruch 11, ***dadurch gekennzeichnet***, daß der Reaktionsbehälter eine Schutzverkleidung und/oder eine Isolierung aufweist und/oder daß die Heizung eine Mantelbeheizung ist.

**13.** 3. Abwasser-Behandlungsanlage nach Anspruch 11 oder 12, ***dadurch gekennzeichnet***, daß der Reaktionsbehälter eine Behälterabdeckung mit Klappsegmentdeckel besitzt.

**14.** 4. Abwasser-Behandlungsanlage nach einem der Ansprüche 11 bis 13, ***dadurch gekennzeichnet***, daß das Rührwerk ein Propellermischer ist.

**15.** 5. Abwasser-Behandlungsanlage nach einem der Ansprüche 11 bis 14, ***dadurch gekennzeichnet***, daß der Reaktionsbehälter einen oder mehrere der folgenden Zusatzaggregate aufweist:

- ein Füllorgan, vorzugsweise eine selbstsaugende Schmutzwasserpumpe,
- eine Wischerkinematik mit vorzugsweise elektropneumatischem Wende-Drehantrieb,
- vorzugsweise pneumatische (Einperl-)Niveaumessung(en)
- Temperaturanzeige(n) und Thermoschalter
- Dosierstellen für die Reaktionschemikalien
- Befüll- und Entleerungsanschlüsse.

**16.** 6. Abwasser-Behandlungsanlage nach Anspruch 15, ***dadurch gekennzeichnet***, daß die Zusatzaggregate auf einer Gerätetraverse untergebracht sind.

**17.** 7. Abwasser-Behandlungsanlage nach einem der Ansprüche 11 bis 16, ***dadurch gekennzeichnet***, daß ferner Löse- und Dosierstationen für die zuzudosierenden Chemikalien vorgesehen sind.

**18.** 8. Abwasser-Behandlungsanlage nach Anspruch 17, ***dadurch gekennzeichnet***, daß die Löse- und Dosierstationen eine oder mehrere der folgenden Vorrichtungen umfassen:
- automatische Wassernachspeisung
- gelochten Zwischenboden
- Tauchrohr zum Soleraum
- Sauggarnitur der Dosierpumpe
- vorzugsweise pneumatische (Einperl-)Niveaumessung
- Dosierpumpe, vorzugsweise auf einen abnehmbaren Deckel aufgesetzt
- Dosierkopf mit Dosierventil.

**19.** 9. Abwasser-Behandlungsanlage nach einem der Ansprüche 11 bis 18, ***dadurch gekennzeichnet***, daß der Reinwasserbehälter einen Filter sowie gegebenenfalls eines oder mehrere der folgenden Zusatzaggregate aufweist:
- vorzugsweise selbstsaugende Filterpumpe,
- vorzugsweise selbstsaugende Entleerungspumpe,
- vorzugsweise pneumatische (Einperl-)Niveaumessung,
- pH-Taucharmatur
- Füll- und Entleerungsanschlüsse.

**20.** 0. Abwasser-Behandlungsanlage nach Anspruch 19, ***dadurch gekennzeichnet,*** daß die Filtereinrichtung ein automatischer Kompaktbandfilter ist, welcher wahlweise umfaßt:
- Filtervlies,
- Endlosgliederband (als Stützauflage für das Filtervlies),
- Schlammkasten.

**21.** 1. Abwasser-Behandlungsanlage nach einem der Ansprüche 10 bis 20, dadurch gekennzeichnet, daß der Reinwasserbehälter eine Gerätetraverse zur Aufnahme der Zusatzaggregate aufweist.

**22.** 2. Abwasser-Behandlungsanlage nach einem der Ansprüche 10 bis 21, ***dadurch gekennzeichnet***, daß eine Wärmepumpe zum Kühlen des Reinwassers und Erwärmen des Reaktionsbehälter-Inhalts vorgesehen ist.

**23.** 3. Abwasser-Behandlungsanlage nach einem der Ansprüche 10 bis 21, ***dadurch gekennzeichnet***, daß ein Strahlkühler zur Kühlung des gereinigten Abwassers vorgesehen ist.

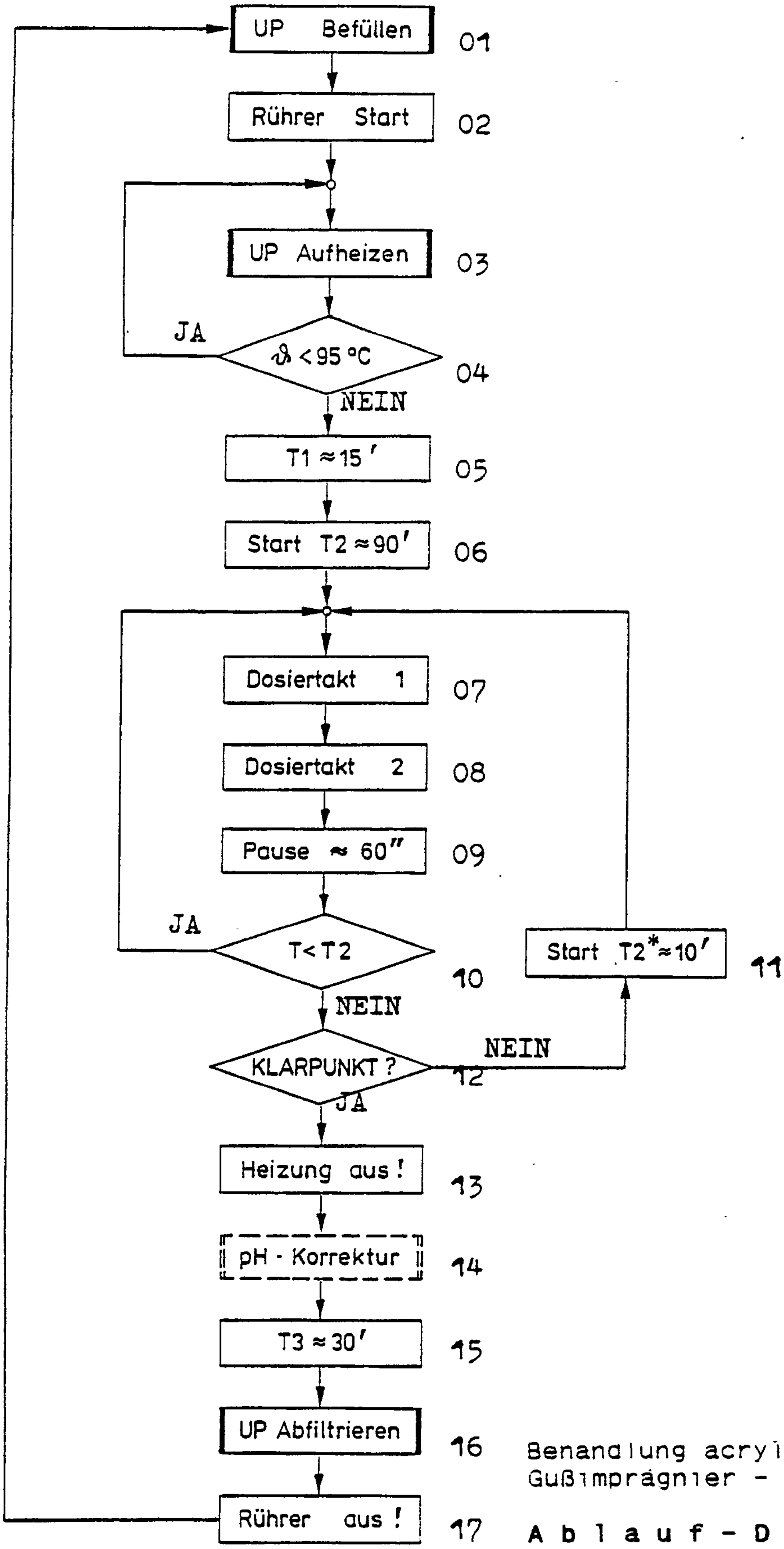


Behandlung acrylanaltiger Gußimprägnier - Spülwässer

A b l a u f - D i a g r a m m

Fig. 1

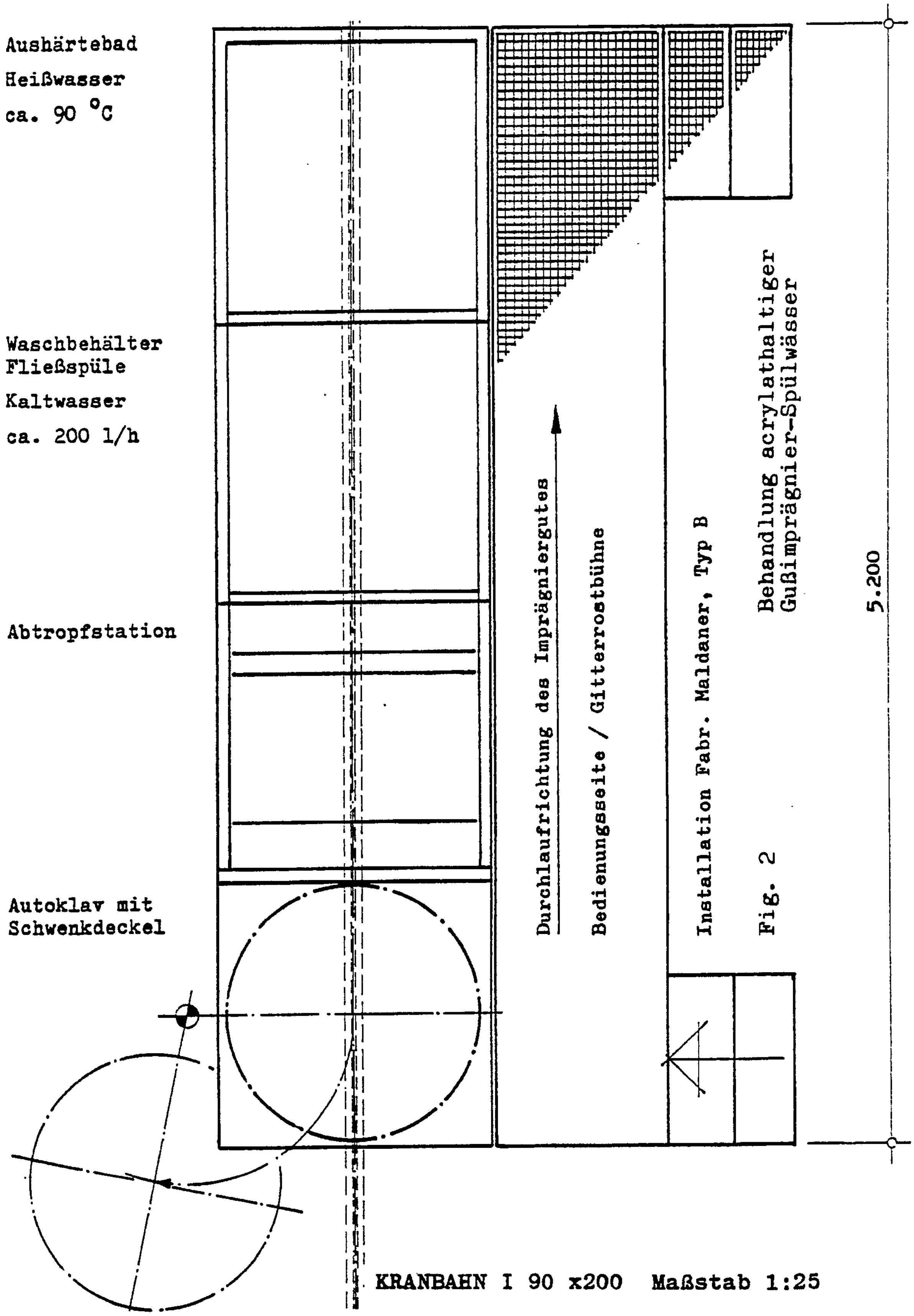
Aushärtebad
Heißwasser
ca. 90 °C
Waschbehälter
Fließspüle
Kaltwasser
ca. 200 l/h
Abtropfstation
Autoklav mit
Schwenkdeckel
Durchlaufrichtung des Imprägniergutes
Bedienungsseite / Gitterrostbühne
Installation Fabr. Maldaner, Typ B
Behandlung acrylathaltiger
Gußimprägnier-Spülwässer
5.200
KRANBAHN I 90 x200 Maßstab 1:25

Fig. 2

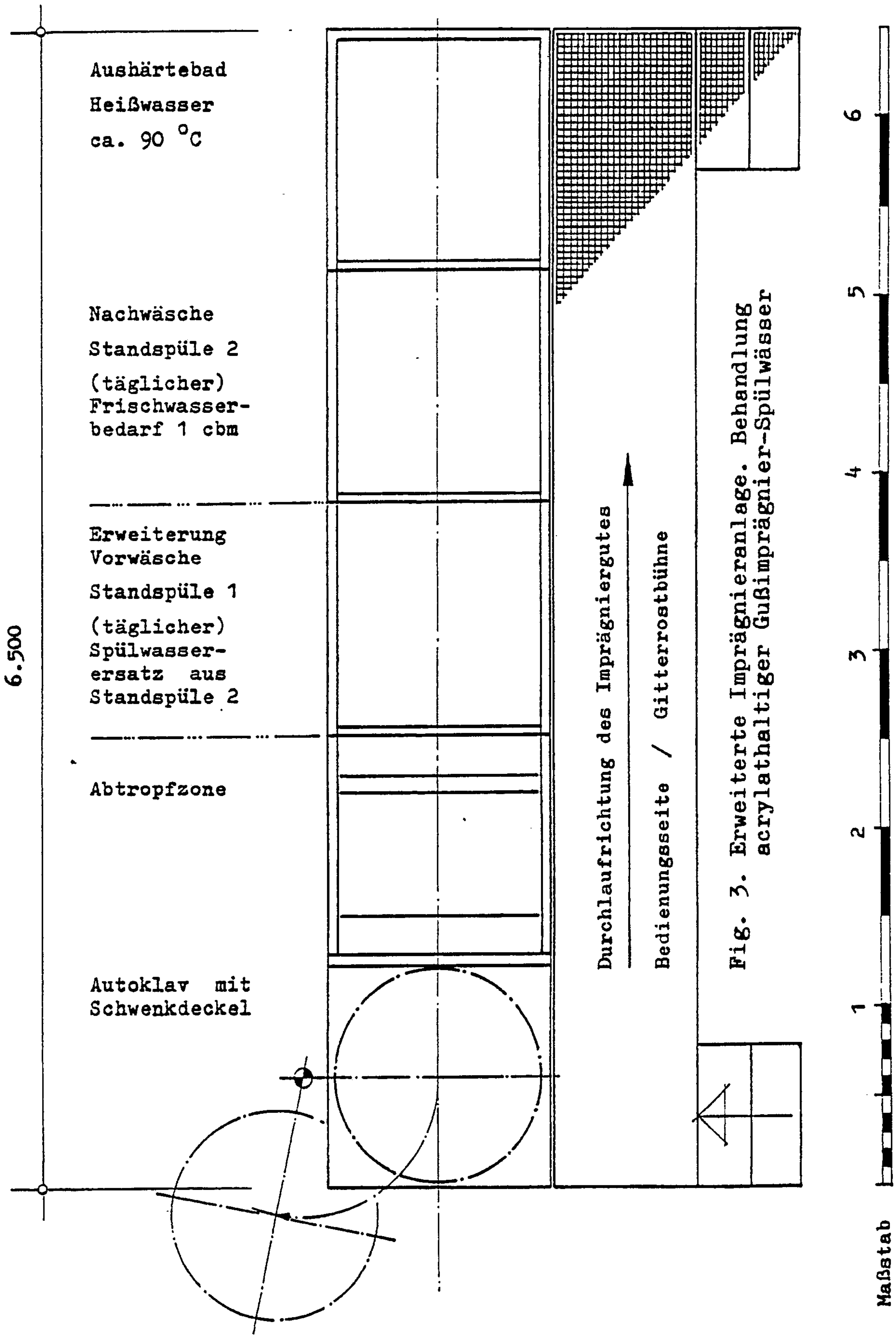


Fig. 3. Erweiterte Imprägnieranlage. Behandlung acrylathaltiger Gußimprägnier-Spülwässer

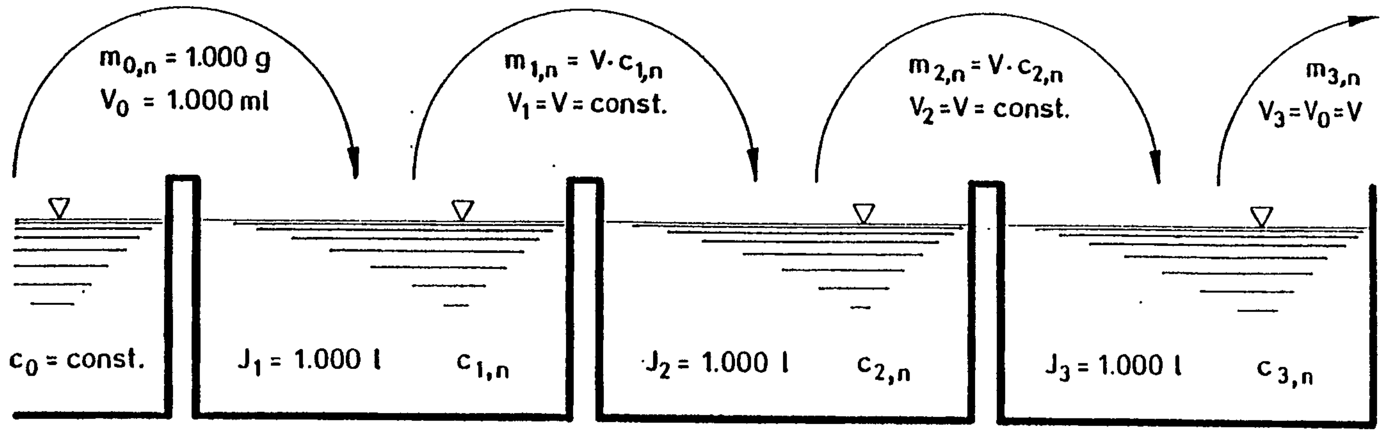


| i = 0 | Bad i = 1 | Bad i = 2 | Bad i = 3 |
|---|---|---|---|
| n = 1 | $c_{1,1}$ = 999,001 ppm | $c_{2,1}$ = 0,998 ppm | $c_{3,1}$ = 0,000.997 ppm |
| n = 2 | $c_{1,2}$ = 1.997,004 ppm | $c_{2,2}$ = 2,992 ppm | $c_{3,2}$ = 0,003.985 ppm |
| n = 3 | $c_{1,3}$ = 2.994,010 ppm | $c_{2,3}$ = 5,980 ppm | $c_{3,3}$ = 0,009.955 ppm |
| n = 4 | $c_{1,4}$ = 3.990,020 ppm | $c_{2,4}$ = 9,960 ppm | $c_{3,4}$ = 0,019.895 ppm |
| n = 5 | $c_{1,5}$ = 4.985,035 ppm | $c_{2,5}$ = 14,930 ppm | $c_{3,5}$ = 0,034.790 ppm |
| n = 6 | $c_{1,6}$ = 5.979,059 ppm | $c_{2,6}$ = 20,888 ppm | $c_{3,6}$ = 0,055.623 ppm |
| n = 7 | $c_{1,7}$ = 6.972,084 ppm | $c_{2,7}$ = 27,833 ppm | $c_{3,7}$ = 0,083.372 ppm |
| n = 8 | $c_{1,8}$ = 7.964,120 ppm | $c_{2,8}$ = 35,761 ppm | $c_{3,8}$ = 0,119.014 ppm |
| n = 9 | $c_{1,9}$ = 8.955,165 ppm | $c_{2,9}$ = 44,671 ppm | $c_{3,9}$ = 0,163.522 ppm |
| n = 10 | $c_{1,10}$ = 9.945,219 ppm | $c_{2,10}$ = 54,562 ppm | $c_{3,10}$ = 0,217.866 ppm |

Standspül-Kaskade

Fig. 4a

| | | | |
|---|---|---|---|
| $c_{i,1}/c_0 =$ | $\frac{V}{J+V}$ | $\left(\frac{V}{J+V}\right)^2$ | $\left(\frac{V}{J+V}\right)^3$ |
| $c_{i,2}/c_0 =$ | $\frac{V}{J+V}\left[1+\left(\frac{J}{J+V}\right)\right]$ | $\left(\frac{V}{J+V}\right)^2\left[1+2\left(\frac{J}{J+V}\right)\right]$ | $\left(\frac{V}{J+V}\right)^3\left[1+3\left(\frac{J}{J+V}\right)\right]$ |
| $c_{i,3}/c_0 =$ | $\frac{V}{J+V}\left[1+\left(\frac{J}{J+V}\right)+\left(\frac{J}{J+V}\right)^2\right]$ | $\left(\frac{V}{J+V}\right)^2\left[1+2\left(\frac{J}{J+V}\right)+3\left(\frac{J}{J+V}\right)^2\right]$ | $\left(\frac{V}{J+V}\right)^3\left[1+3\left(\frac{J}{J+V}\right)+6\left(\frac{J}{J+V}\right)^2\right]$ |
| ... | ... | ... | ... |
| $c_{i,10}/c_0 =$ | $\frac{V}{J+V}\left[1+\left(\frac{J}{J+V}\right)+\left(\frac{J}{J+V}\right)^2+\right.$ $\left.\cdots\left(\frac{J}{J+V}\right)^7+\left(\frac{J}{J+V}\right)^8+\left(\frac{J}{J+V}\right)^9\right]$ | $\left(\frac{V}{J+V}\right)^2\left[1+2\left(\frac{J}{J+V}\right)+3\left(\frac{J}{J+V}\right)^2\right.$ $\left.\cdots 8\left(\frac{J}{J+V}\right)^7+9\left(\frac{J}{J+V}\right)^8+10\left(\frac{J}{J+V}\right)^9\right]$ | $\left(\frac{V}{J+V}\right)^3\left[1+3\left(\frac{J}{J+V}\right)+6\left(\frac{J}{J+V}\right)^2+\right.$ $\left.+\cdots+45\left(\frac{J}{J+V}\right)^8+55\left(\frac{J}{J+V}\right)^9\right]$ |

$$\frac{c_{i,n}}{c_0} = \left(\frac{V}{J+V}\right)^i\left[1+\sum_{\nu=1}^{n-1}\left(\frac{J}{J+V}\right)^\nu\cdot\prod\frac{i-1+\nu}{\nu}\right] \approx \frac{1}{i}\left(\frac{nV}{J+nV}\right)^i$$

Standspül - Kaskade

Fig. 4b

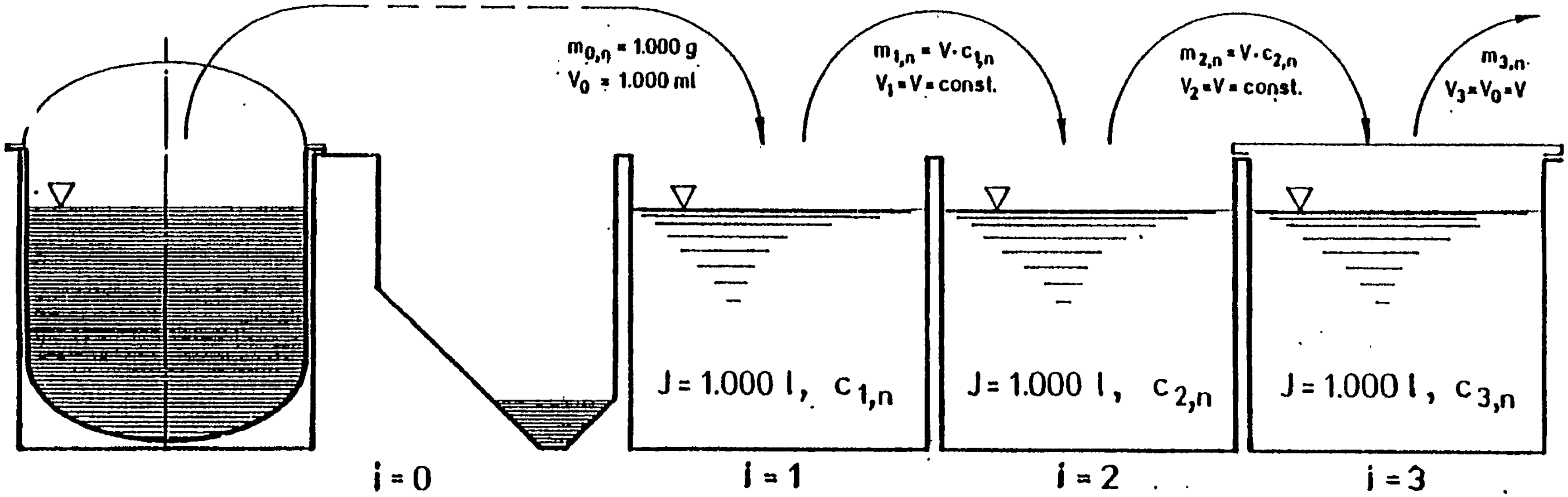


| | i = 1 | i = 2 | i = 3 |
|---|---|---|---|
| n = 1 | $c_{1,1}$ = 999,001 ppm | $c_{2,1}$ = 0,998 ppm | $c_{3,1}$ = 0,000.997 ppm |
| n = 2 | $c_{1,2}$ = 1.997,004 ppm | $c_{2,2}$ = 2,992 ppm | $c_{3,2}$ = 0,003.985 ppm |
| n = 3 | $c_{1,3}$ = 2.994,010 ppm | $c_{2,3}$ = 5,980 ppm | $c_{3,3}$ = 0,009.955 ppm |
| n = 4 | $c_{1,4}$ = 3.990,020 ppm | $c_{2,4}$ = 9,960 ppm | $c_{3,4}$ = 0,019.895 ppm |
| n = 5 | $c_{1,5}$ = 4.985,035 ppm | $c_{2,5}$ = 14,930 ppm | $c_{3,5}$ = 0,034.790 ppm |
| n = 6 | $c_{1,6}$ = 5.979,059 ppm | $c_{2,6}$ = 20,886 ppm | $c_{3,6}$ = 0,055.623 ppm |
| n = 7 | $c_{1,7}$ = 6.972,084 ppm | $c_{2,7}$ = 27,833 ppm | $c_{3,7}$ = 0,083.372 ppm |
| n = 8 | $c_{1,8}$ = 7.964,120 ppm | $c_{2,8}$ = 35,761 ppm | $c_{3,8}$ = 0,119.014 ppm |
| n = 9 | $c_{1,9}$ = 8.955,165 ppm | $c_{2,9}$ = 44,671 ppm | $c_{3,9}$ = 0,163.522 ppm |
| n = 10 | $c_{1,10}$ = 9.945,219 ppm | $c_{2,10}$ = 54.562 ppm | $c_{3,10}$ = 0,217.866 ppm |

BEISPIEL Annahme :

$J_i$ = const. = 1.000 l

$V_i$ = const. = 1.000 ml

$m_o$ = const. = 1.000 g

$c_o$ = const. = 1 kg / l

$$\frac{c_{i,n}}{c_0} = \left(\frac{V}{J+V}\right)^i \left[ 1 + \sum_{\nu=1}^{n-1} \left(\frac{J}{J+V}\right)^{\nu} \cdot \prod \frac{i-1+\nu}{\nu} \right] \approx \frac{1}{i} \left(\frac{nV}{J+nV}\right)^i$$

Fig. 5a. Spültechnik + Gesamtverfahren. Behandlung acrylathaltiger Gußimprägnier-Spülwässer

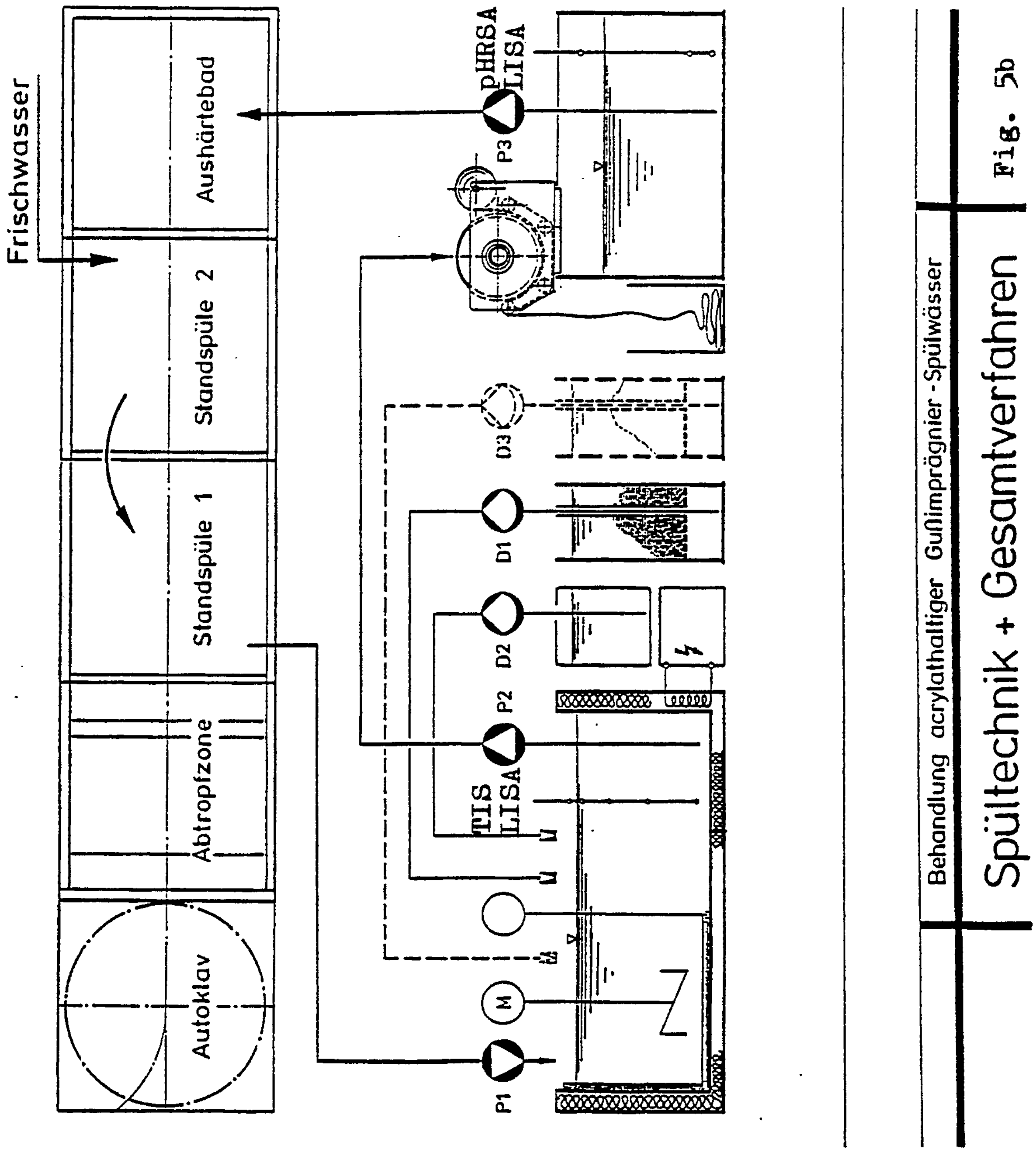
Frischwasser
Autoklav
Abtropfzone
Standspüle 1
Standspüle 2
Aushärtebad
P1
M
D3
TIS
LISA
P2
D2
D1
P3
pHRSA
LISA
Behandlung acrylathaltiger Gußimprägnier-Spülwässer
Spültechnik + Gesamtverfahren

Fig. 5b

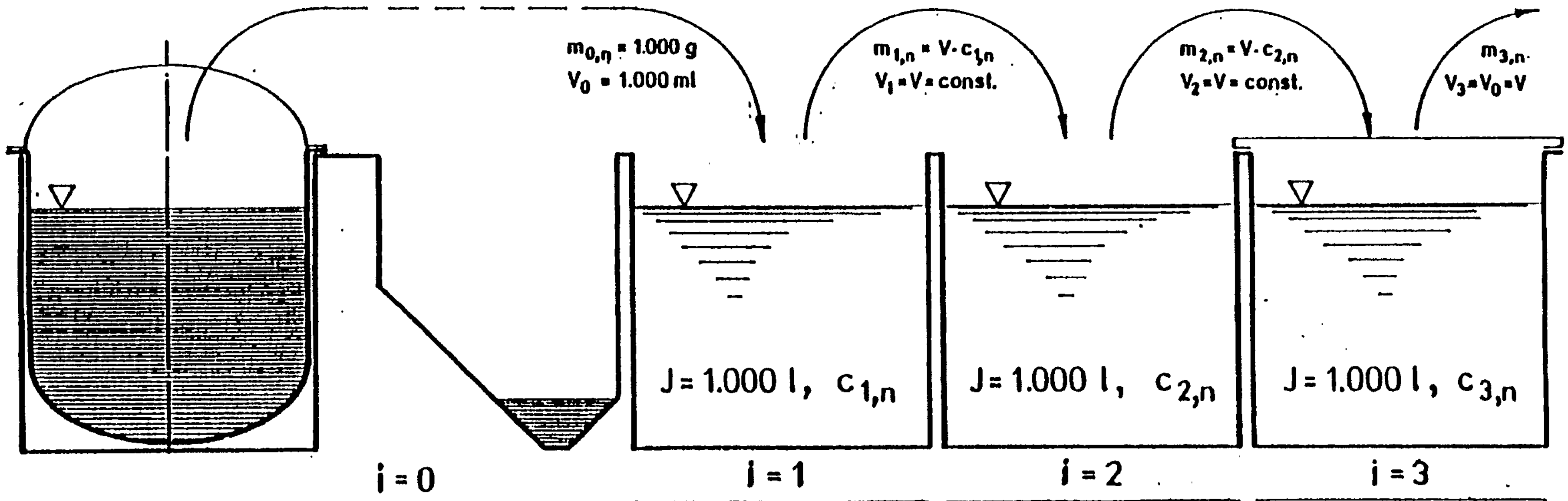


| | i = 1 | | i = 2 | | i = 3 | |
|---|---|---|---|---|---|---|
| n = 1 | $c_{1,1}$ = 999,001 | ppm | $c_{2,1}$ = 0,998 | ppm | $c_{3,1}$ = 0,000.997 | ppm |
| n = 2 | $c_{1,2}$ = 1.997,004 | ppm | $c_{2,2}$ = 2,992 | ppm | $c_{3,2}$ = 0,003.985 | ppm |
| n = 3 | $c_{1,3}$ = 2.994,010 | ppm | $c_{2,3}$ = 5,980 | ppm | $c_{3,3}$ = 0,009.955 | ppm |
| n = 4 | $c_{1,4}$ = 3.990,020 | ppm | $c_{2,4}$ = 9,960 | ppm | $c_{3,4}$ = 0,019.895 | ppm |
| n = 5 | $c_{1,5}$ = 4.985,035 | ppm | $c_{2,5}$ = 14,930 | ppm | $c_{3,5}$ = 0,034.790 | ppm |
| n = 6 | $c_{1,6}$ = 5.979,059 | ppm | $c_{2,6}$ = 20,888 | ppm | $c_{3,6}$ = 0,055.623 | ppm |
| n = 7 | $c_{1,7}$ = 6.972,084 | ppm | $c_{2,7}$ = 27,833 | ppm | $c_{3,7}$ = 0,083.372 | ppm |
| n = 8 | $c_{1,8}$ = 7.964,120 | ppm | $c_{2,8}$ = 35,761 | ppm | $c_{3,8}$ = 0,119.014 | ppm |
| n = 9 | $c_{1,9}$ = 8.955,165 | ppm | $c_{2,9}$ = 44,671 | ppm | $c_{3,9}$ = 0,163.522 | ppm |
| n = 10 | $c_{1,10}$ = 9.945,219 | ppm | $c_{2,10}$ = 54,562 | ppm | $c_{3,10}$ = 0,217.866 | ppm |

BEISPIEL Annahme :

$J_i$ = const. = 1.000 l

$V_i$ = const. = 1.000 ml

$m_o$ = const. = 1.000 g

$c_o$ = const. = 1 kg / l

$$\frac{c_{i,n}}{c_0} = \left(\frac{V}{J+V}\right)^i \left[ 1 + \sum_{\nu=1}^{n-1} \left(\frac{J}{J+V}\right)^{\nu} \cdot \prod \frac{i-1+\nu}{\nu} \right] \approx \frac{1}{i} \left(\frac{nV}{J+nV}\right)^i$$

Fig. 6a. Spültechnik + Gesamtverfahren. Behandlung acrylathaltiger Gußimprägnier-Spülwässer

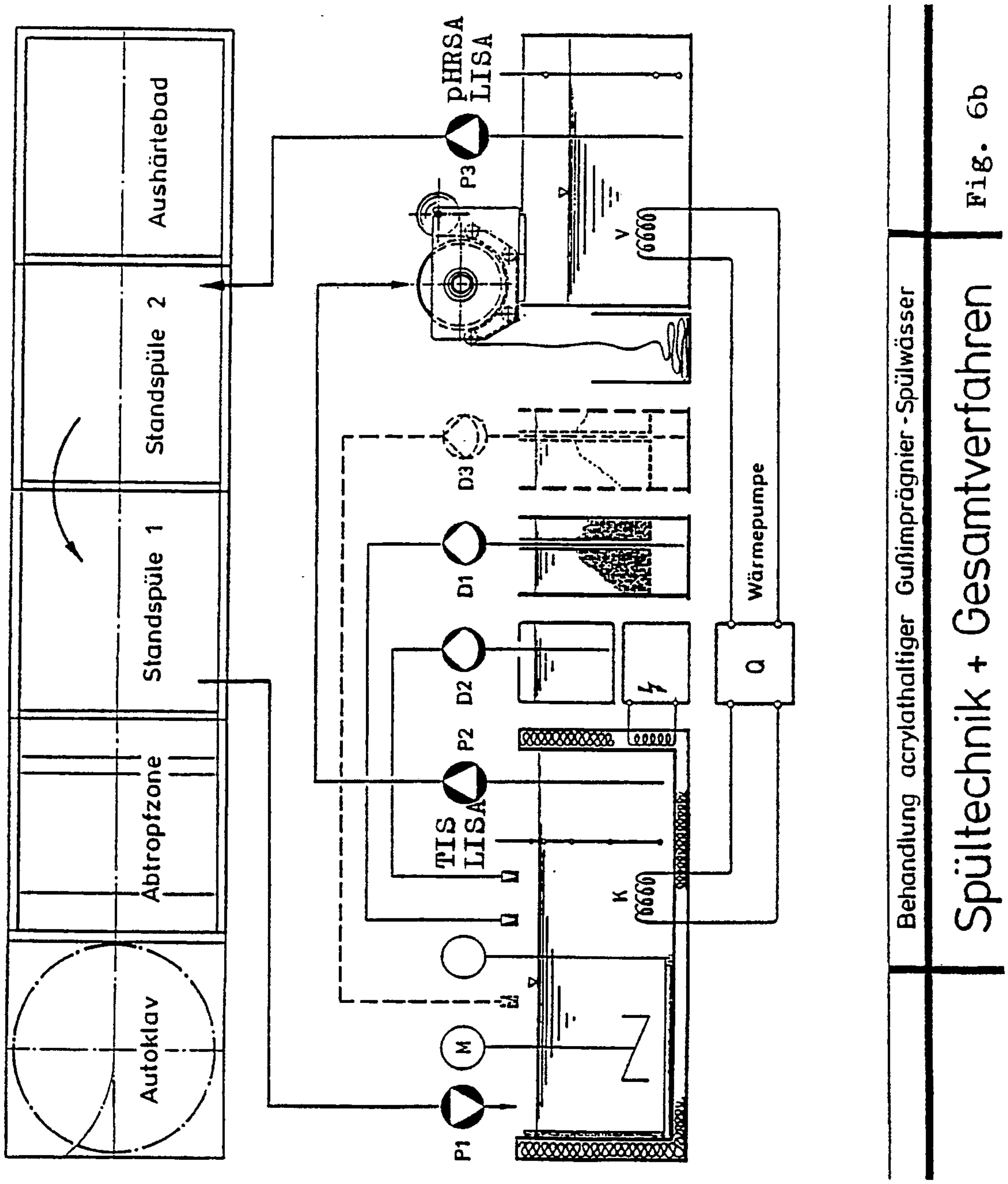

Autoklav
Abtropfzone
Standspüle 1
Standspüle 2
Aushärtebad
P1
M
TIS
LISA
P2
D2
D1
D3
P3
pHRSA
LISA
K
V
Q
Wärmepumpe
Behandlung acrylathaltiger Gußimprägnier-Spülwässer
Spültechnik + Gesamtverfahren


Fig. 6b

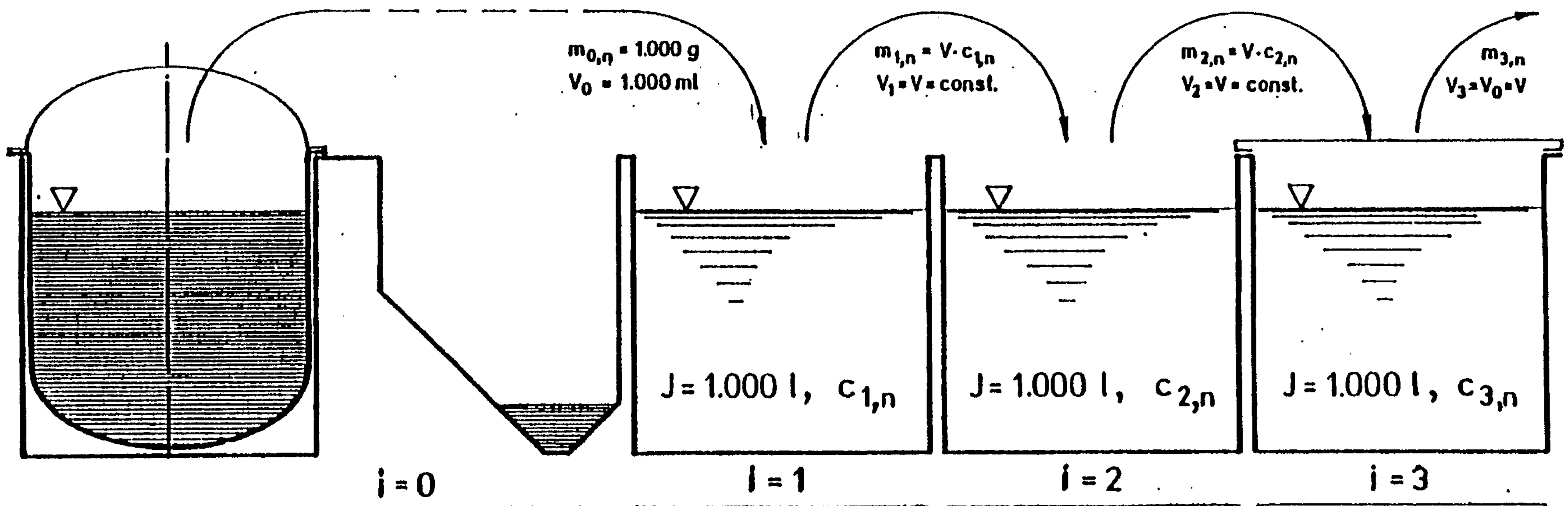


| | i = 1 | i = 2 | i = 3 |
|---|---|---|---|
| n = 1 | $c_{1,1}$ = 999,001 ppm | $c_{2,1}$ = 0,998 ppm | $c_{3,1}$ = 0,000.997 ppm |
| n = 2 | $c_{1,2}$ = 1.997,004 ppm | $c_{2,2}$ = 2,992 ppm | $c_{3,2}$ = 0,003.985 ppm |
| n = 3 | $c_{1,3}$ = 2.994,010 ppm | $c_{2,3}$ = 5,980 ppm | $c_{3,3}$ = 0,009.955 ppm |
| n = 4 | $c_{1,4}$ = 3.990,020 ppm | $c_{2,4}$ = 9,960 ppm | $c_{3,4}$ = 0,019.895 ppm |
| n = 5 | $c_{1,5}$ = 4.985,035 ppm | $c_{2,5}$ = 14,930 ppm | $c_{3,5}$ = 0,034.790 ppm |
| n = 6 | $c_{1,6}$ = 5.979,059 ppm | $c_{2,6}$ = 20,888 ppm | $c_{3,6}$ = 0,055.623 ppm |
| n = 7 | $c_{1,7}$ = 6.972,084 ppm | $c_{2,7}$ = 27,833 ppm | $c_{3,7}$ = 0,083.372 ppm |
| n = 8 | $c_{1,8}$ = 7.964,120 ppm | $c_{2,8}$ = 35,761 ppm | $c_{3,8}$ = 0,119.014 ppm |
| n = 9 | $c_{1,9}$ = 8.955,165 ppm | $c_{2,9}$ = 44,671 ppm | $c_{3,9}$ = 0,163.522 ppm |
| n = 10 | $c_{1,10}$ = 9.945,219 ppm | $c_{2,10}$ = 54,562 ppm | $c_{3,10}$ = 0,217.866 ppm |

**BEISPIEL Annahme :**

$J_i$ = const. = 1.000 l

$V_i$ = const. = 1.000 ml

$m_o$ = const. = 1.000 g

$c_o$ = const. = 1 kg / l

$$\frac{c_{i,n}}{c_0} = \left(\frac{V}{J+V}\right)^i \left[ 1 + \sum_{\nu=1}^{n-1} \left(\frac{J}{J+V}\right)^{\nu} \cdot \prod \frac{i-1+\nu}{\nu} \right] \approx \frac{1}{i} \left(\frac{nV}{J+nV}\right)^i$$

Fig. 6c. Spültechnik + Gesamtverfahren. Behandlung acrylathaltiger Gußimprägnier-Spülwässer

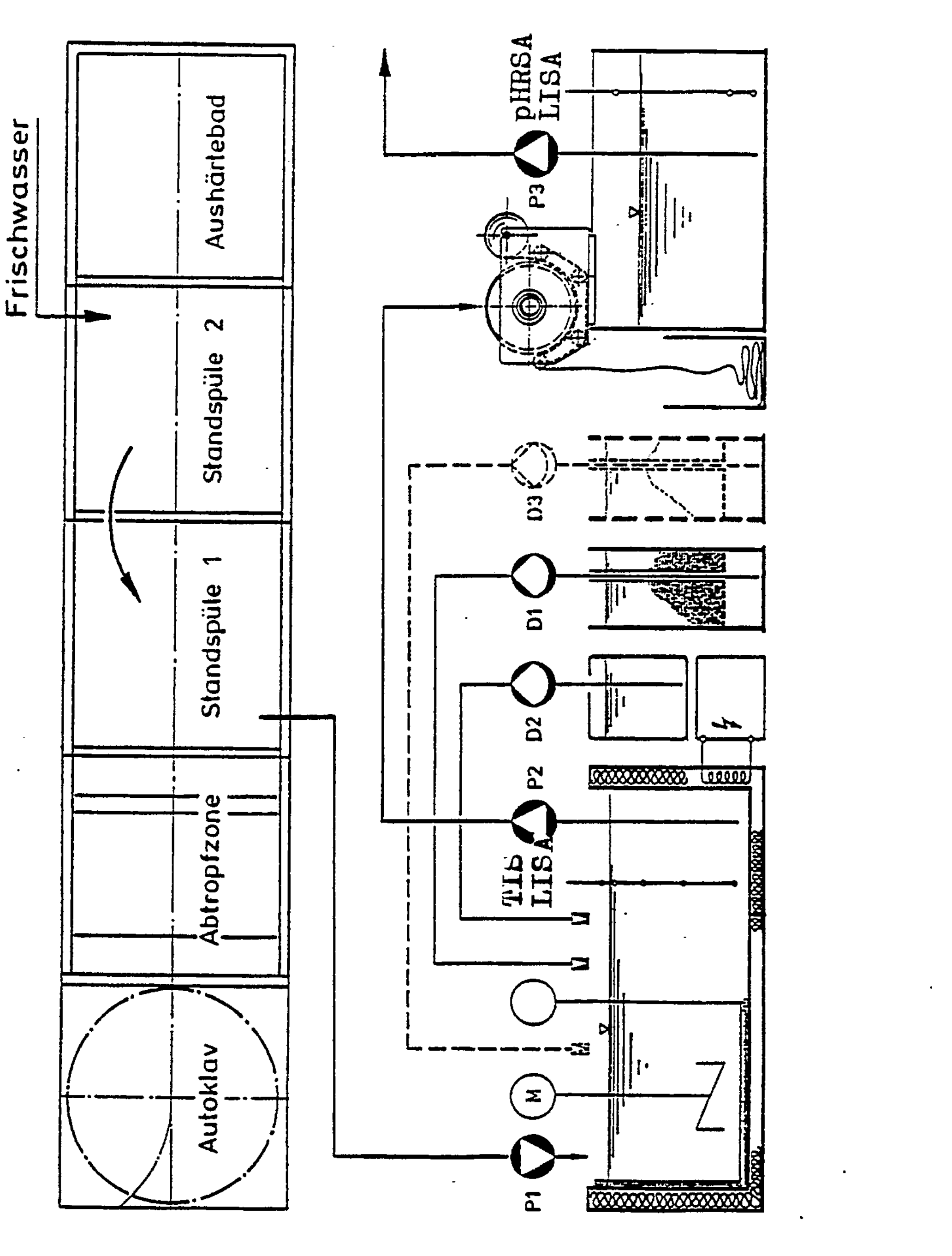


Behandlung acrylathaltiger Gußimprägnier-Spülwässer

Spültechnik + Gesamtverfahren

Fig. 6d

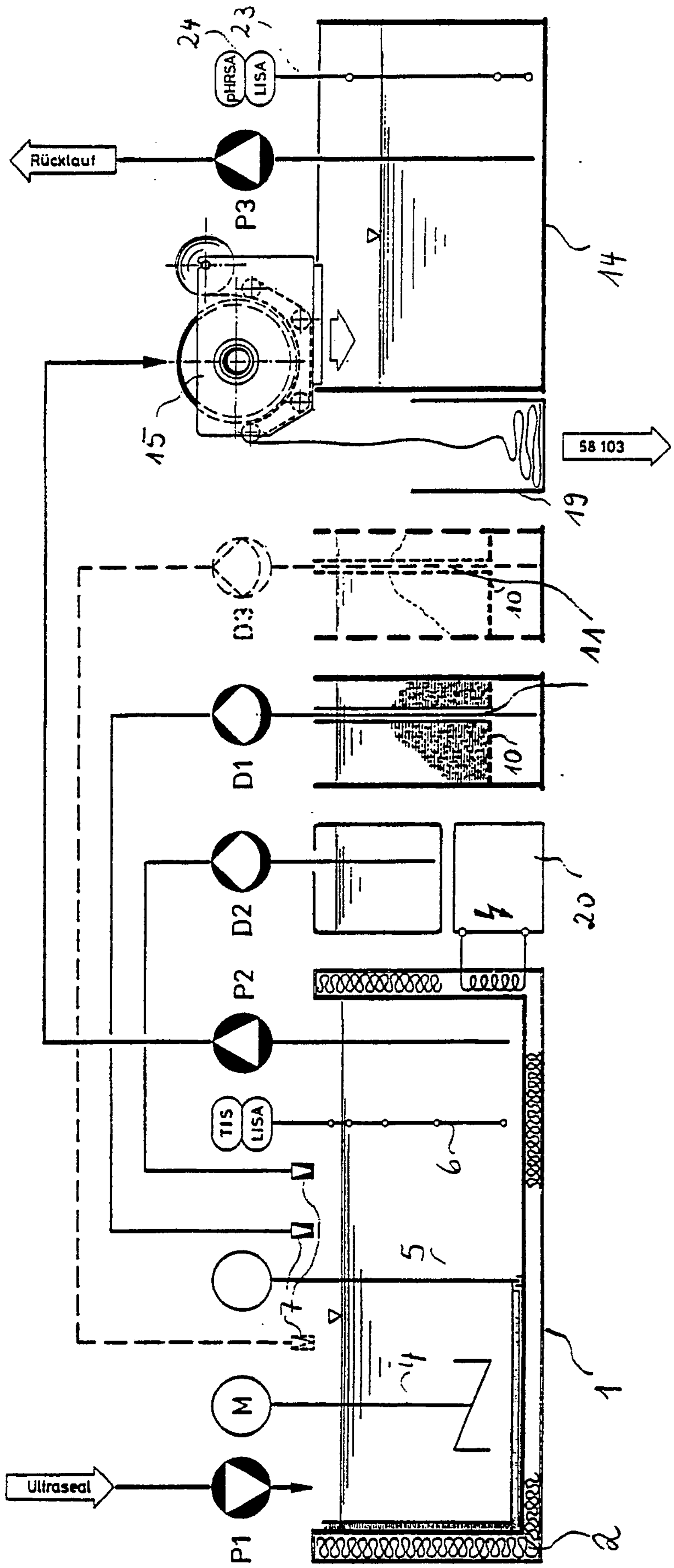


Fig. 7. Verfahrens-Grundversion. Behandlung acrylathaltiger Gußimprägnier-Spülwässer

Fig. 8. Version mit Wärmepumpe. Behandlung acrylathaltiger Gußimprägnier-Spülwässer

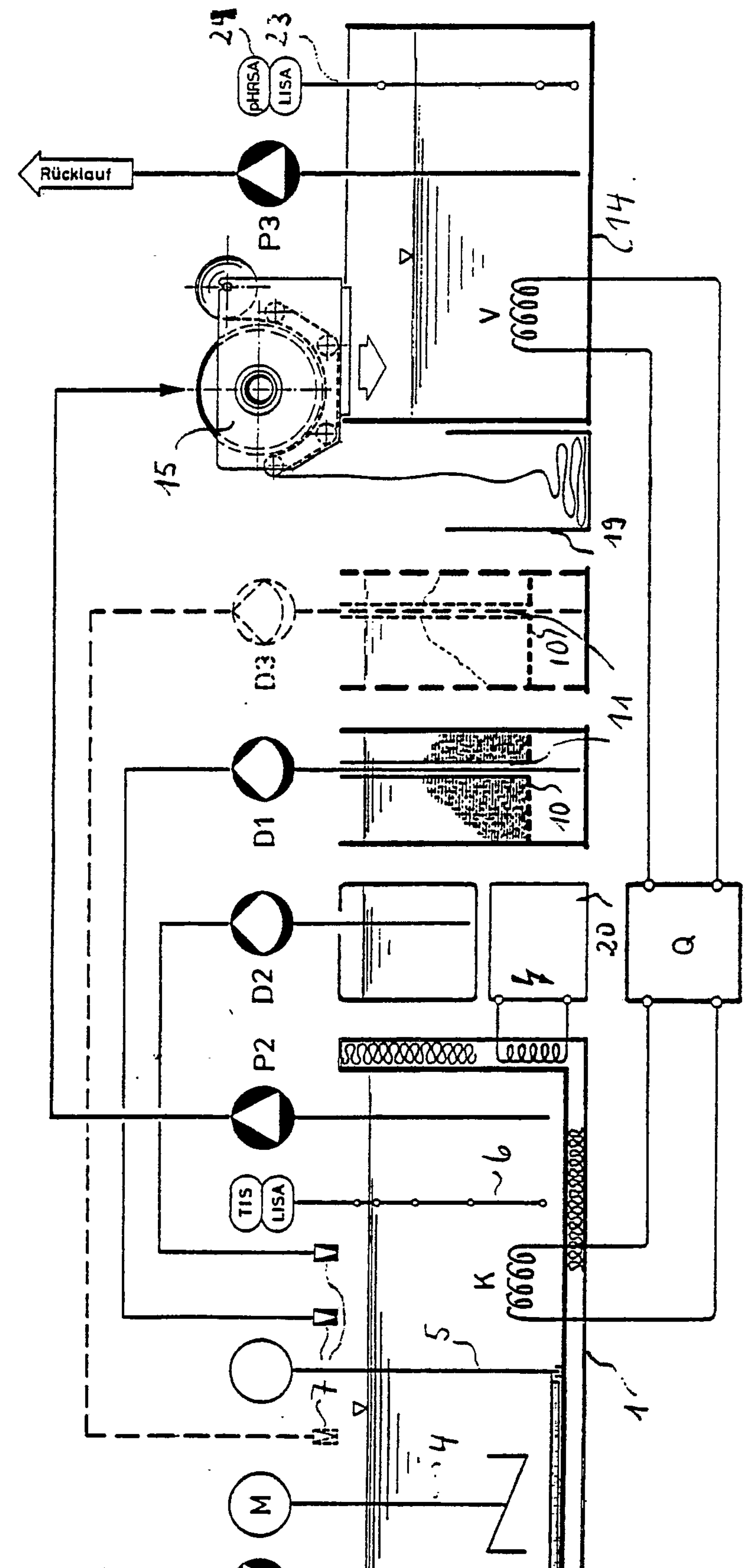

Fig. 9. Version mit Strahlkühler. Behandlung acrylathaltiger Gußimprägnier-Spülwässer

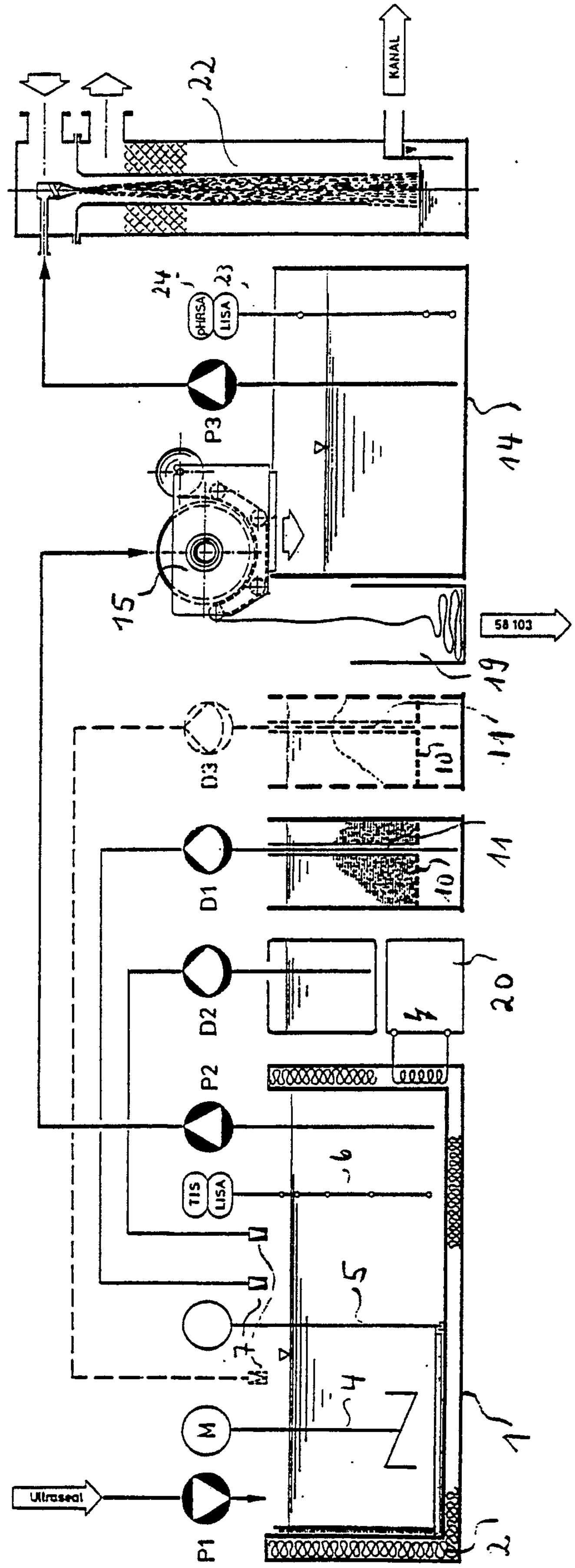

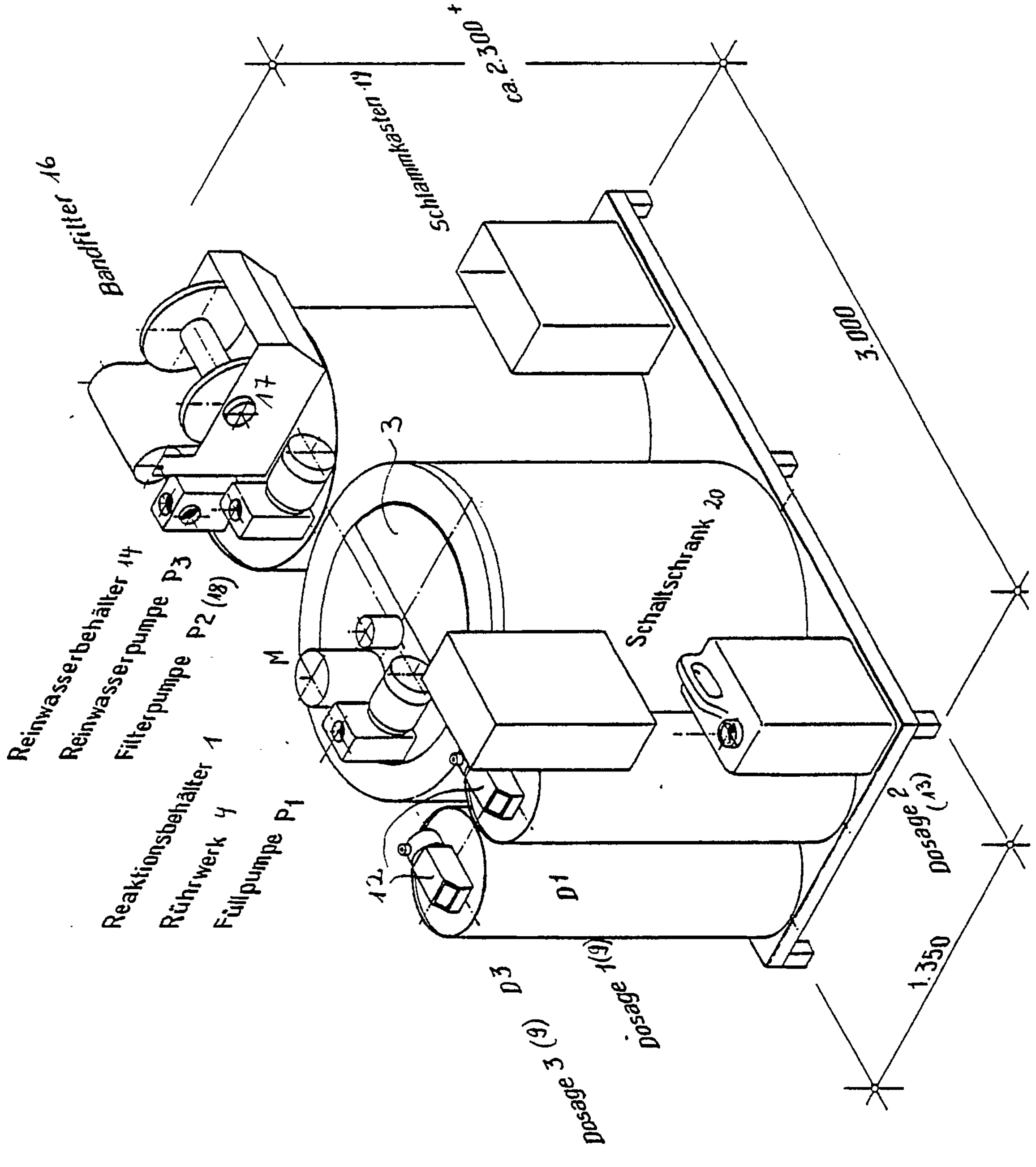


| | Behandlung acrylathaltiger Gußimprägnier-Spülwässer | |
|---|---|---|
| | Anlagen-Grundversion | Fig. 10 |

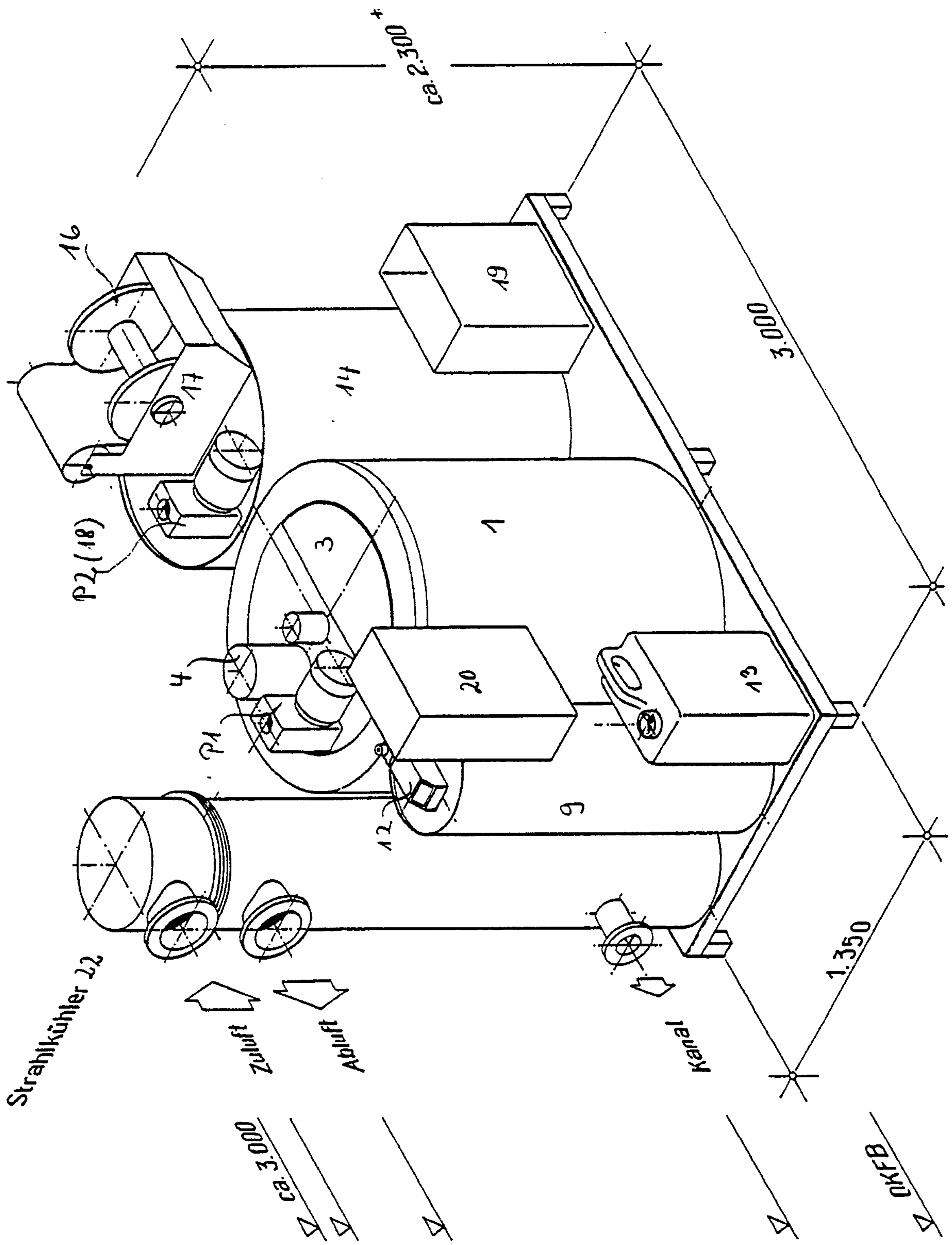


Behandlung acrylathaltiger Gußimprägnier-Spülwässer

Version mit Strahlkühler

Fig. 11

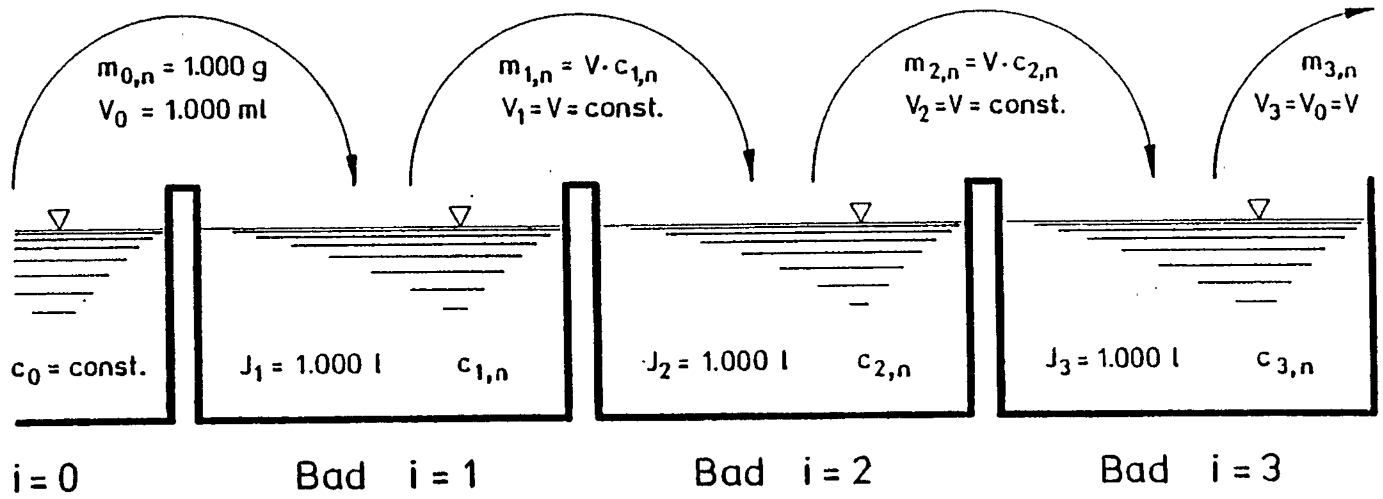


| | | | |
|---|---|---|---|
| n = 1 | $c_{1,1}$ = 999,001 ppm | $c_{2,1}$ = 0,998 ppm | $c_{3,1}$ = 0,000.997 ppm |
| n = 2 | $c_{1,2}$ = 1.997,004 ppm | $c_{2,2}$ = 2,992 ppm | $c_{3,2}$ = 0,003.985 ppm |
| n = 3 | $c_{1,3}$ = 2.994,010 ppm | $c_{2,3}$ = 5,980 ppm | $c_{3,3}$ = 0,009.955 ppm |
| n = 4 | $c_{1,4}$ = 3.990,020 ppm | $c_{2,4}$ = 9,960 ppm | $c_{3,4}$ = 0,019.895 ppm |
| n = 5 | $c_{1,5}$ = 4.985,035 ppm | $c_{2,5}$ = 14,930 ppm | $c_{3,5}$ = 0,034.790 ppm |
| n = 6 | $c_{1,6}$ = 5.979,059 ppm | $c_{2,6}$ = 20,888 ppm | $c_{3,6}$ = 0,055.623 ppm |
| n = 7 | $c_{1,7}$ = 6.972,084 ppm | $c_{2,7}$ = 27,833 ppm | $c_{3,7}$ = 0,083.372 ppm |
| n = 8 | $c_{1,8}$ = 7.964,120 ppm | $c_{2,8}$ = 35,761 ppm | $c_{3,8}$ = 0,119.014 ppm |
| n = 9 | $c_{1,9}$ = 8.955,165 ppm | $c_{2,9}$ = 44,671 ppm | $c_{3,9}$ = 0,163.522 ppm |
| n = 10 | $c_{1,10}$ = 9.945,219 ppm | $c_{2,10}$ = 54,562 ppm | $c_{3,10}$ = 0,217.866 ppm |

Standspül-Kaskade

Fig. 12a

| | | | |
|---|---|---|---|
| $c_{i,1}/c_o =$ | $\frac{V}{J+V}$ | $\left(\frac{V}{J+V}\right)^2$ | $\left(\frac{V}{J+V}\right)^3$ |
| $c_{i,2}/c_o =$ | $\frac{V}{J+V}\left[1+\left(\frac{J}{J+V}\right)\right]$ | $\left(\frac{V}{J+V}\right)^2\left[1+2\left(\frac{J}{J+V}\right)\right]$ | $\left(\frac{V}{J+V}\right)^3\left[1+3\left(\frac{J}{J+V}\right)\right]$ |
| $c_{i,3}/c_o =$ | $\frac{V}{J+V}\left[1+\left(\frac{J}{J+V}\right)+\left(\frac{J}{J+V}\right)^2\right]$ | $\left(\frac{V}{J+V}\right)^2\left[1+2\left(\frac{J}{J+V}\right)+3\left(\frac{J}{J+V}\right)^2\right]$ | $\left(\frac{V}{J+V}\right)^3\left[1+3\left(\frac{J}{J+V}\right)+6\left(\frac{J}{J+V}\right)^2\right]$ |
| ... | ... | ... | ... |
| $c_{i,10}/c_o =$ | $\frac{V}{J+V}\left[1+\left(\frac{J}{J+V}\right)+\left(\frac{J}{J+V}\right)^2+\cdots\left(\frac{J}{J+V}\right)^7+\left(\frac{J}{J+V}\right)^8+\left(\frac{J}{J+V}\right)^9\right]$ | $\left(\frac{V}{J+V}\right)^2\left[1+2\left(\frac{J}{J+V}\right)+3\left(\frac{J}{J+V}\right)^2\cdots 8\left(\frac{J}{J+V}\right)^7+9\left(\frac{J}{J+V}\right)^8+10\left(\frac{J}{J+V}\right)^9\right]$ | $\left(\frac{V}{J+V}\right)^3\left[1+3\left(\frac{J}{J+V}\right)+6\left(\frac{J}{J+V}\right)^2+\cdots+45\left(\frac{J}{J+V}\right)^8+55\left(\frac{J}{J+V}\right)^9\right]$ |

$$\frac{c_{i,n}}{c_0} = \left(\frac{V}{J+V}\right)^i \left[1 + \sum_{\nu=1}^{n-1} \left(\frac{J}{J+V}\right)^{\nu} \cdot \prod \frac{i-1+\nu}{\nu}\right] \approx \frac{1}{i}\left(\frac{nV}{J+nV}\right)^i$$

Standspül-Kaskade

Fig. 12b

Europäisches Patentamt

# EUROPÄISCHER RECHERCHENBERICHT

Nummer der Anmeldung

**EP 91 10 0810**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 945 516 (PCUK-PRODUITS CHIMIQUES UGINE KUHLMANN) * Seite 1; Ansprüche 1, 2, 4, 6 * * Seite 3, Zeile 21 - Seite 4, Zeile 15 @ Seite 5 * dritter Absatz - Seite 7, zweiter Ab satz * * Seite 9 * Beispiel 6 * | 1-4,9-12, 14 | C 02 F 1/58<br>C 08 F 6/00 |
| X | DE-A-2 705 169 (BAYER A.G.) * Seite 1; Ansprüche 1, 3, 5 * * Seite 4 * Absätze 1,2 * * Seite 8, Zeilen 1 - 7 * | 1-4,9 | |
| A | WO-A-8 906 245 (LOCTITE CORPORATION) * Seite 1, Zeilen 1 - 4 * * Seite 9, Zeile 7 - Seite 10, Zeile 10 * | 1-5 | |

| RECHERCHIERTE SACHGEBIETE (Int. Cl.5) |
|---|
| C 02 F<br>C 08 F |

Der vorliegende Recherchenbericht wurde für alle Patentansprüche erstellt

| Recherchenort | Abschlußdatum der Recherche | Prüfer |
|---|---|---|
| Den Haag | 13 Mai 91 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument